# EUROPÄISCHE PATENTSCHRIFT

(11) **EP 0 719 837 B1**
(45) Veröffentlichungstag und Bekanntmachung des Hinweises auf die Patenterteilung: **26.07.2000**
(21) Anmeldenummer: 95810764.1
(22) Anmeldetag: 05.12.1995
(51) Int. Cl.: C09B 31/043, C09B 31/047, C09B 35/04

(54) **Azofarbstoffe, Verfahren zu deren Herstellung und deren Verwendung**
Azo dyes, process for their preparation and use thereof
Colorants azoiques, procédé pour leur préparation et leur utilisation

(30) Priorität: 12.12.1994 CH 375894
(43) Veröffentlichungstag der Anmeldung: 03.07.1996
(73) Patentinhaber: Ciba Specialty Chemicals Holding Inc., 4057 Basel (CH)
(72) Erfinder: Hurter, Rudolf, CH-4058 Basel (CH)

(56) Entgegenhaltungen:
- CH-A- 635 361
- FR-A- 2 290 474
- US-A- 4 217 102
- US-A- 4 323 498

## Beschreibung

Die vorliegende Erfindung betrifft neue Azofarbstoffe, Verfahren zu deren Herstellung und Verwendung dieser Farbstoffe zum Färben und Bedrucken von Fasermaterialien, insbesondere textilen Fasermaterialien.

Disazofarbstoffe sind zum Beispiel aus US-A-4 217 102 bekannt.

Gegenstand der vorliegenden Erfindung sind Azofarbstoffe der Formel 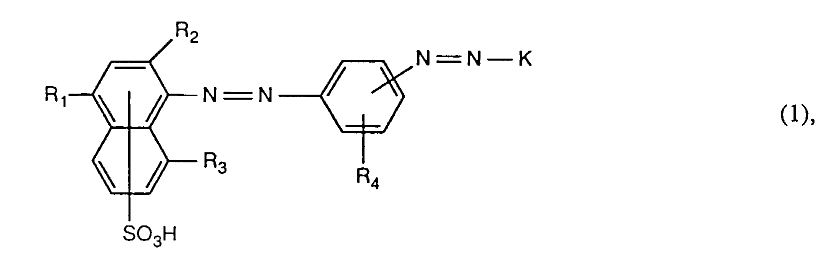 worin
R₁ Wasserstoff oder gegebenenfalls substituiertes Phenylamino,
R₂ Wasserstoff, Amino oder N-Mono- oder N,N-Di-C₁-C₄-Alkylamino,
R₃ Wasserstoff oder Hydroxyl,
R₄ Wasserstoff, C₁-C₄-Alkyl, C₁-C₄-Alkoxy, C₂-C₄-Alkanoylamino, Ureido oder Halogen und
K ein Rest der Formel 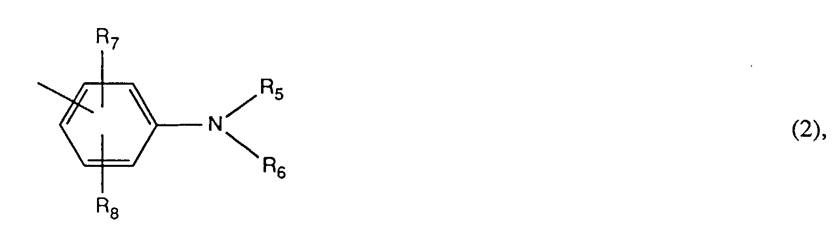 worin
R₅ und R₆ unabhängig voneinander Wasserstoff oder gegebenenfalls durch Hydroxyl oder Phenyl substituiertes C₁-C₄-Alkyl sind, wobei der Phenylrest unsubstituiert oder durch C₁-C₄-Alkyl, C₁-C₄-Alkoxy, C₂-C₄-Alkanoylamino, Ureido, Halogen oder Sulfo substituiert ist, und
R₇ und R₈ unabhängig voneinander Wasserstoff, C₁-C₄-Alkyl, C₁-C₄-Alkoxy, C₂-C₄-Alkanoylamino, Ureido, Halogen oder Sulfo bedeuten;
   oder ein Rest der Formel 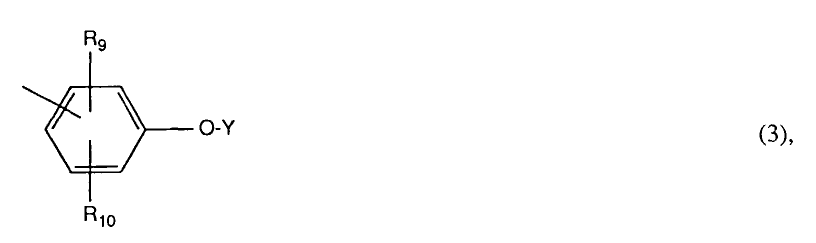 worin
Y Wasserstoff oder gegebenenfalls durch Hydroxyl substituiertes C₁-C₄-Alkyl ist und
R₉ und R₁₀ unabhängig voneinander Wasserstoff, C₁-C₄-Alkyl, C₁-C₄-Alkoxy, C₂-C₄-Alkanoylamino, Ureido, Halogen oder Sulfo bedeuten;
   oder ein Rest der Formel 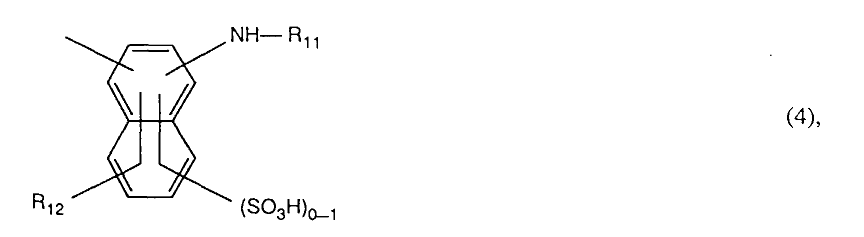 worin
R₁₁ Wasserstoff, C₁-C₄-Alkyl oder gegebenenfalls durch C₁-C₄-Alkyl, C₁-C₄-Alkoxy, C₂-C₄-Alkanoylamino, Ureido, Halogen oder Sulfo substituiertes Phenyl und
R₁₂ Wasserstoff, C₁-C₄-Alkyl, C₁-C₄-Alkoxy, C₂-C₄-Alkanoylamino, Ureido, Halogen oder Hydroxyl bedeutet;
   oder ein Rest der Formel 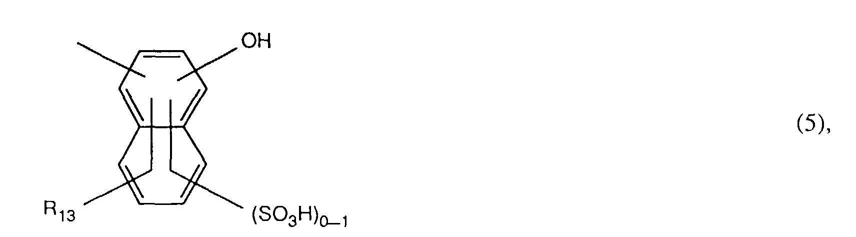 worin
R₁₃ Wasserstoff, C₁-C₄-Alkyl, C₁-C₄-Alkoxy, C₂-C₄-Alkanoylamino, Ureido oder Halogen bedeutet;
   oder ein Rest der Formel 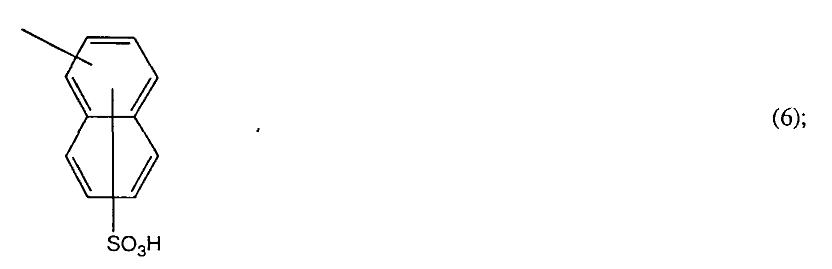 oder ein Rest der Formel 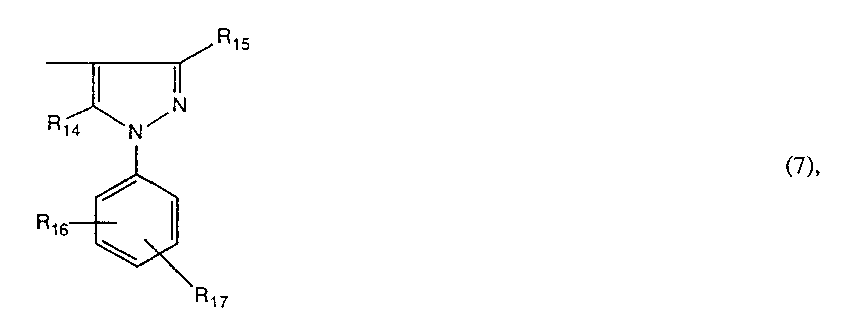 worin
R₁₄ Amino oder Hydroxyl,
R₁₅ Methyl oder Carboxyl und
R₁₆ und R₁₇ unabhängig voneinander Wasserstoff, C₁-C₄-Alkyl, C₁-C₄-Alkoxy, C₂-C₄-Alkanoylamino, Ureido, Halogen oder Sulfo bedeuten;
   oder ein Rest der Formel 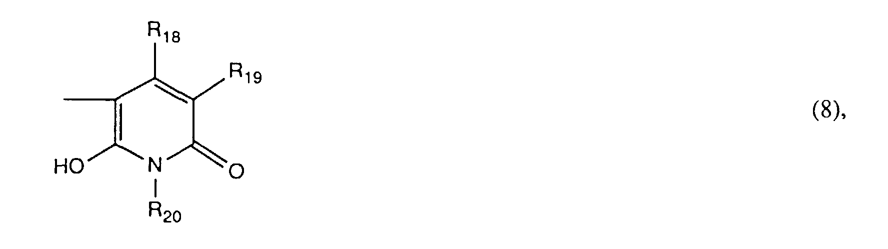 worin
R₁₈ Wasserstoff oder C₁-C₄-Alkyl,
R₁₉ Cyano, Carbamoyl oder Sulfomethyl und
R₂₀ Wasserstoff, C₁-C₄-Alkyl oder unsubstituiertes oder durch C₁-C₄-Alkyl, C₁-C₄-Alkoxy, C₂-C₄-Alkanoylamino, Ureido, Halogen oder Sulfo substituiertes Phenyl bedeutet;
   oder ein Rest der Formel 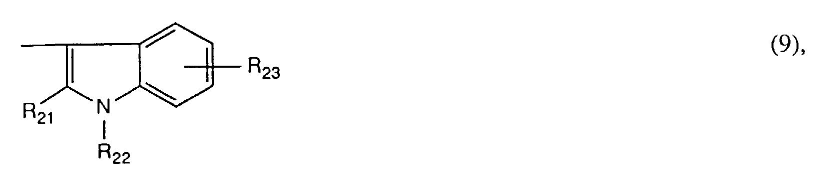 worin
R₂₁ Wasserstoff, C₁-C₈-Alkyl oder unsubstituiertes oder durch C₁-C₄-Alkyl, C₁-C₄-Alkoxy, C₂-C₄-Alkanoylamino, Ureido, Halogen oder Sulfo substituiertes Phenyl,
R₂₂ Wasserstoff oder C₁-C₈-Alkyl und
R₂₃ Wasserstoff, C₁-C₄-Alkyl, C₁-C₄-Alkoxy, C₂-C₄-Alkanoylamino, Ureido, Halogen oder Sulfo bedeutet;
ist, und die Azofarbstoffe der Formel (1) mindestens eine und höchstens zwei Sulfogruppen enthalten,
mit der Massgabe, dass, falls R₁ und R₂ Wasserstoff sind und K ein Rest der Formel (2) ist, der Rest R₄ C₂-C₄-Alkanoylamino oder Ureido bedeutet.

Als C₁-C₄-Alkyl kommen für Y, R₄, R₅, R₆, R₇, R₈, R₉, R₁₀, R₁₁, R₁₂, R₁₃, R₁₆, R₁₇, R₁₈, R₂₀ und R₂₃ Methyl, Aethyl, Propyl, Isopropyl, Butyl, Isobutyl, sek.-Butyl oder tert.-Butyl, insbesondere Methyl oder Äthyl, in Betracht, wobei die Alkylreste Y, R₅ und R₆ gegebenenfalls wie oben angegeben weitersubstituiert sein können.

Als C₁-C₈-Alkyl kommen für R₂₁ und R₂₂ z.B. Methyl, Aethyl, Propyl, Isopropyl, Butyl, Isobutyl, sek.-Butyl, tert.-Butyl oder geradkettiges oder verzweigtes Pentyl, Hexyl, Heptyl oder Octyl, insbesondere Methyl oder Äthyl, in Betracht,

Als C₁-C₄-Alkoxy kommen für R₄, R₇, R₈, R₉, R₁₀, R₁₂, R₁₃, R₁₆, R₁₇ und R₂₃ beispielsweise Methoxy, Aethoxy, Propoxy, Isopropoxy, Butoxy, sek.-Butoxy, Isobutoxy oder tert.-Butoxy, insbesondere Methoxy oder Äthoxy, in Betracht.

Als C₂-C₄-Alkanoylamino kommen für R₄, R₇, R₈, R₉, R₁₀, R₁₂, R₁₃, R₁₆, R₁₇ und R₂₃ beispielsweise Acetylamino, Propionylamino oder Butyrylamino, insbesondere Acetylamino, in Betracht.

Als Halogen kommen für R₄, R₇, R₈, R₉, R₁₀, R₁₂, R₁₃, R₁₆, R₁₇ und R₂₃ beispielsweise Fluor oder Brom und insbesondere Chlor in Betracht.

Als N-Mono- oder N,N-Di-C₁-C₄-Alkylamino kommen für R₂ z.B. solche mit Methyl- oder Aethylresten in Betracht. Bevorzugt sind N-Mono-C₁-C₄-Alkylamine, wie z.B. -NHC₂C₅ oder insbesondere -NHCH₃.

Als gegebenenfalls substituiertes Phenylamino kommen für R₁ neben den unsubstituierten Resten z.B. die im Phenylring durch C₁-C₄-Alkyl, C₁-C₄-Alkoxy, C₂-C₄-Alkanoylamino, Ureido, Halogen oder Sulfo substituierten Reste in Betracht. Bevorzugt ist gegebenenfalls im Phenylring durch C₁-C₄-Alkyl, C₁-C₄-Alkoxy oder Halogen, insbesondere gegebenenfalls im Phenylring durch C₁-C₄-Alkyl oder C₁-C₄-Alkoxy, substituiertes Phenylamino. Besonders bevorzugt ist der Phenylaminorest unsubstituiert.

R₁ ist bevorzugt Wasserstoff oder Phenylamino, insbesondere Wasserstoff.

R₂ ist bevorzugt Wasserstoff oder Amino.

Von besonderem Interesse sind Azofarbstoffe der Formel (1), worin R₁, R₂ und R₃ Wasserstoff sind. Von ganz besonderem Interesse sind weiterhin Azofarbstoffe der Formel (1), worin R₁ Wasserstoff, R₂ Amino und R₃ Hydroxyl ist.

R₄ ist bevorzugt Wasserstoff, C₁-C₄-Alkyl, C₁-C₄-Alkoxy, C₂-C₄-Alkanoylamino oder Ureido, insbesondere Wasserstoff, C₁-C₄-Alkyl, C₁-C₄-Alkoxy oder Ureido, vorzugsweise Wasserstoff.

Als Reste K der Formel (2) sind solche bevorzugt, worin
R₅ und R₆ unabhängig voneinander Wasserstoff oder gegebenenfalls durch Hydroxyl oder Phenyl substituiertes C₁-C₄-Alkyl sind, wobei der Phenylrest unsubstituiert oder durch Sulfo substituiert ist, und
R₇ und R₈ unabhängig voneinander Wasserstoff, C₁-C₄-Alkyl oder C₁-C₄-Alkoxy bedeuten.

Als Reste K der Formel (3) sind solche bevorzugt, worin
Y Wasserstoff oder C₁-C₄-Alkyl, insbesondere Wasserstoff, ist und
R₉ und R₁₀ unabhängig voneinander Wasserstoff, C₁-C₄-Alkyl oder C₁-C₄-Alkoxy bedeuten.

Als Reste K der Formel (4) sind solche bevorzugt, worin
R₁₁ Wasserstoff, C₁-C₄-Alkyl oder Phenyl und R₁₂ Wasserstoff oder Hydroxyl bedeutet.

Als Reste K der Formel (5) sind solche bevorzugt, worin
R₁₃ Wasserstoff bedeutet.

Als Reste K der Formel (7) sind solche bevorzugt, worin
R₁₄ Hydroxyl, R₁₅ Methyl und R₁₆ und R₁₇ unabhängig voneinander Wasserstoff, C₁-C₄-Alkyl, C₁-C₄-Alkoxy oder Sulfo bedeuten.

Als Reste K der Formel (8) sind solche bevorzugt, worin
R₁₈ C₁-C₄-Alkyl, R₁₉ Cyano oder Carbamoyl und R₂₀ C₁-C₄-Alkyl bedeutet.

Als Reste K der Formel (9) sind solche bevorzugt, worin
R₂₁ C₁-C₈-Alkyl, R₂₂ Wasserstoff und R₂₃ Wasserstoff bedeutet.

Besonders bevorzugt ist K ein Rest der Formel (3), (4), (6), (7), (8) oder (9), insbesondere ein Rest der Formel (3), (4) oder (6) und vorzugsweise ein Rest der Formel (4) oder (6). Ganz besonders bevorzugt ist K ein Rest der Formel (4).

Bevorzugt sind Azofarbstoffe der Formel 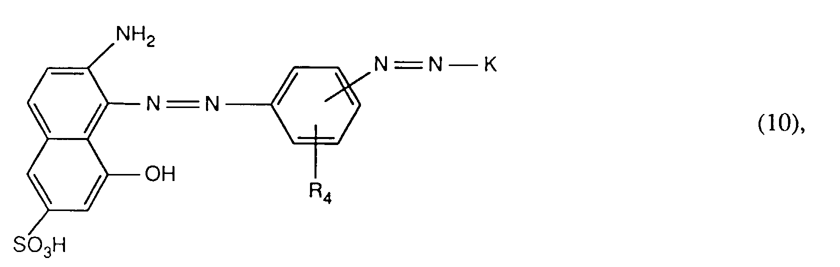 wobei für R₄ und K die oben angegebenen Bedeutungen und Bevorzugungen gelten.

Weiterhin bevorzugt sind Azofarbstoffe der Formel 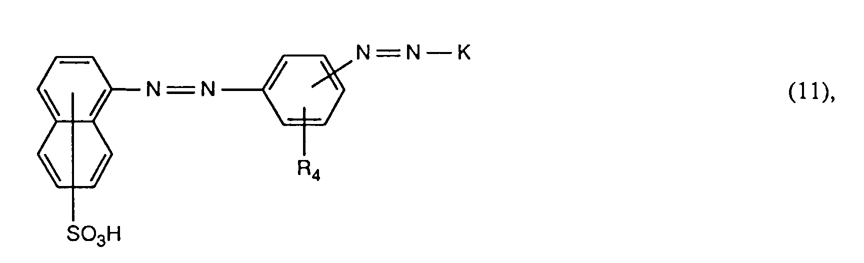 wobei für R₄ und K die oben angegebenen Bedeutungen und Bevorzugungen gelten.

Vorzugsweise ist in den Azofarbstoffen der Formeln (10) und (11) R₄ Wasserstoff, C₁-C₄-Alkyl, C₁-C₄-Alkoxy, C₂-C₄-Alkanoylamino oder Ureido und K ein Rest der Formel (3), (4) oder (6), insbesondere ein Rest der Formel (4) oder (6).

Von besonderem Interesse sind Azofarbstoffe der Formel (10).

Gegenstand der vorliegenden Erfindung ist ferner ein Verfahren zur Herstellung von Azofarbstoffen der Formel (1), welches dadurch gekennzeichnet ist, dass man ein Amin der Formel 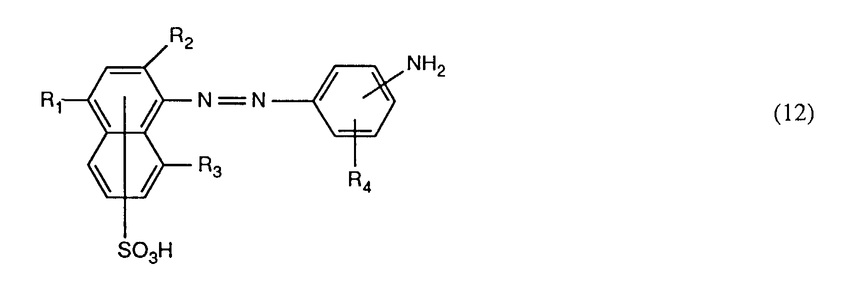 diazotiert und auf eine Kupplungskomponente der Formel

H-K (13)

kuppelt, oder
ein Amin der Formel 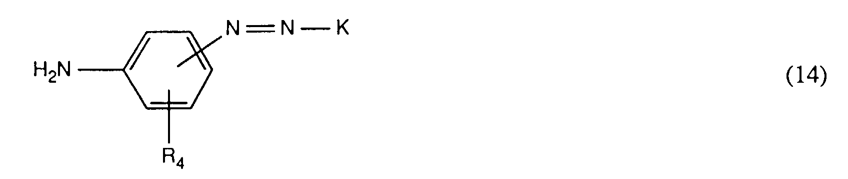 diazotiert und auf eine Kupplungskomponente der Formel 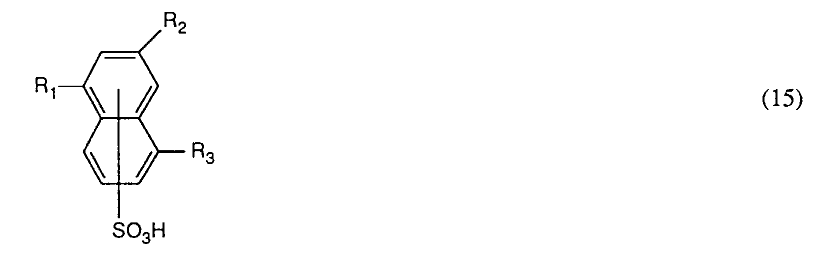 kuppelt,
wobei gegebenenfalls im Anschluss an die Umsetzung der Verbindungen der Formeln (12) und (13) oder der Verbindungen der Formeln (14) und (15) eine Umwandlungsreaktion erfolgt und R₁, R₂, R₃, R₄ und K die unter Formel (1) angegebenen Bedeutungen haben.

Die Diazotierung erfolgt jeweils in an sich bekannter Weise, z.B. mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 30°C und vorzugsweise bei 0 bis 10°C.

Die Kupplung erfolgt jeweils in an sich bekannter Weise, bei sauren, neutralen bis schwach alkalischen pH-Werten und Temperaturen von beispielsweise -5 bis 30°C, vorzugsweise 0 bis 25°C.

Gegebenenfalls kann als Umwandlungsreaktion im Anschluss an die Herstellung des Azofarbstoffes z.B. noch eine Alkylierung ausgeführt werden. So kann z.B. eine aromatisch gebundene Hydroxygruppe alkyliert werden, wie z.B. durch Alkylierung mit Dialkylsulfat, Dialkylcarbonat, Dialkylmethanphosphonat oder Toluolsulfonsäurestermethyl-Derivaten. Die Alkylierung erfolgt z.B. in wässriger Lösung nach an sich bekannter Verfahrensweise.

Die Verbindungen der Formeln (12), (13), (14) und (15) sind bekannt oder können in Analogie zu bekannten Verbindungen hergestellt werden.

Die Farbstoffe der Formel (1) liegen entweder in der Form ihrer freien Säure oder vorzugsweise als deren Salze vor.

Als Salze kommen beispielsweise die Alkali- oder Ammmoniumsalze oder die Salze eines organischen Amins in Betracht.

Als Beispiel seien die Natrium-, Lithium-, Kalium- oder Ammoniumsalze oder das Salz des Mono-, Di- oder Triäthanolamins genannt.

Die erfindungsgemässen Azofarbstoffe der Formel (1) eignen sich nach an sich bekannten Methoden zum Färben und Bedrucken, insbesondere von stickstoffhaltigen oder hydroxygruppenhaltigen Fasermaterialien, Papier oder Leder, wie z.B. textilen Fasermaterialien aus Cellulose, Seide und insbesondere Wolle und synthetischen Polyamiden. Die erfindungsgemässen Azofarbstoffe der Formel (1) können in allgemein üblicher, gegebenenfalls zuvor aufbereiteter Form zum Färben oder Bedrucken verwendet werden. Man erhält egale Färbungen mit guten Allgemeinechtheiten, insbesondere guter Reib-, Nass-, Nassreib- und Lichtechtheit. Ferner weisen die erfindungsgemässen Farbstoffe ein sehr gutes Ausziehvermögen auf. Weiterhin zeigen die erfindungsgemässen Farbstoffe ein sehr gutes Aufbauvermögen und sind sehr gut mit anderen Farbstoffen kombinierbar. Das oben genannte Textilmaterial kann in den verschiedensten Verarbeitungsformen vorliegen, wie z.B. als Faser, Garn, Gewebe oder Gewirke.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Herstellungsbeispiel 1: 34,5 Teile p-Nitroanilin werden in üblicher Weise salzsauer mit Natriumnitrit diazotiert.

Die so hergestellte Diazolösung wird bei Raumtemperatur zu einer Suspension, welche 59,8 Teile 2-Amino-8-naphthol-6-sulfonsäure und 250 Teile Wasser enthält, gegeben. Man lässt während 20 Stunden auskuppeln und stellt dann den pH mittels wässriger Natriumhydroxidlösung (30%) auf einen Wert von 9,5. Man erhält eine Suspension, welche die in Form der freien Säure angegebene Verbindung der Formel 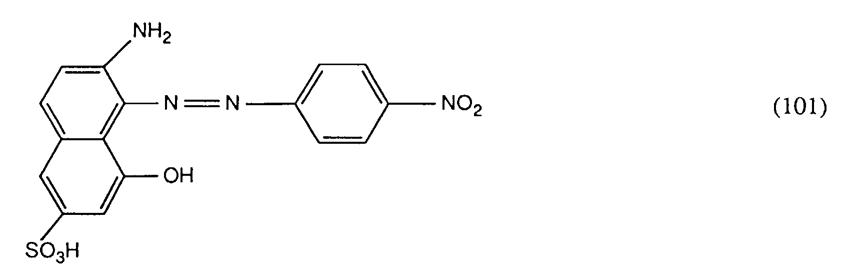 enthält.

1000 Teile der so erhältlichen Suspension werden auf eine Temperatur von 55°C erwärmt und mit 39 Teilen Natriumsulfid versetzt. Die entstehende Lösung wird 15 Minuten bei einer Temperatur von 72 bis 75°C nachgerührt und anschliessend klärfiltriert. Nach Zugabe von 90 Teilen einer wässrigen Natriumhydroxidlösung (30%) wird die entstehende Ausfällung nach einiger Zeit abfiltriert, mit wässriger Natrimchloridlösung (15%) gewaschen und im Vakuum bei einer Temperatur von 50 bis 60°C getrocknet. Man erhält 83 Teile einer Verbindung, welche in Form der freien Säure der Formel 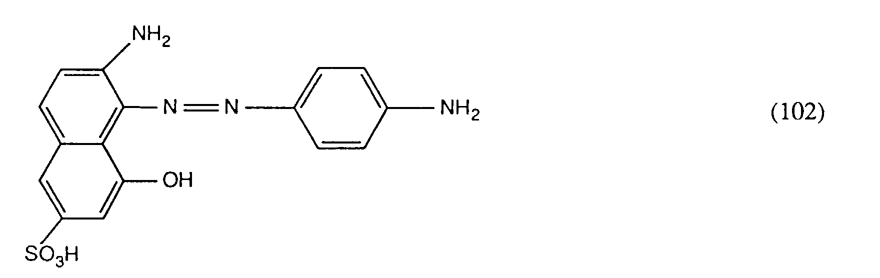 entspricht.

In analoger Weise zu Herstellungsbeispiel 1 können die Verbindungen der Formeln 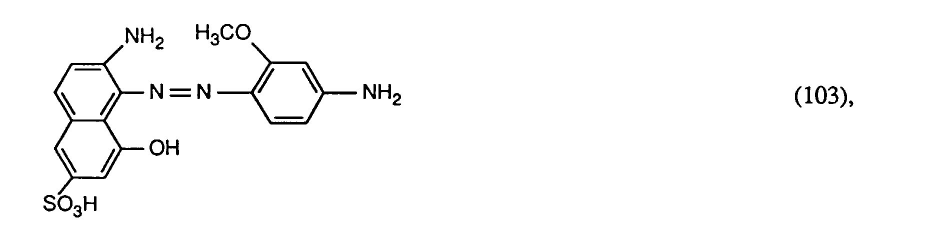 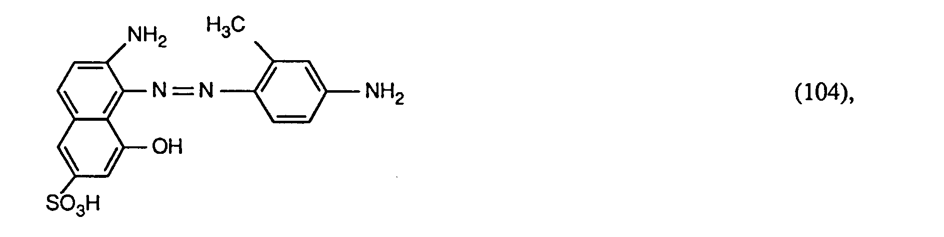 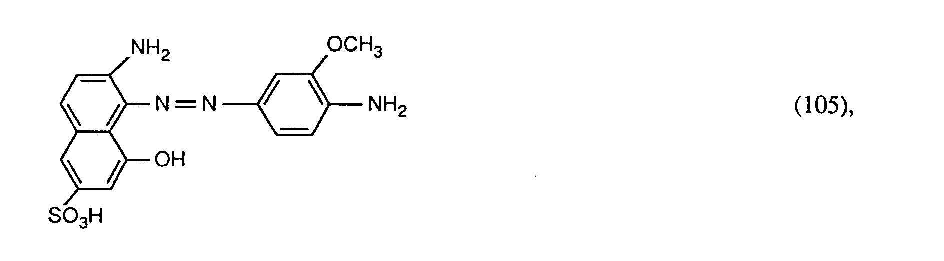 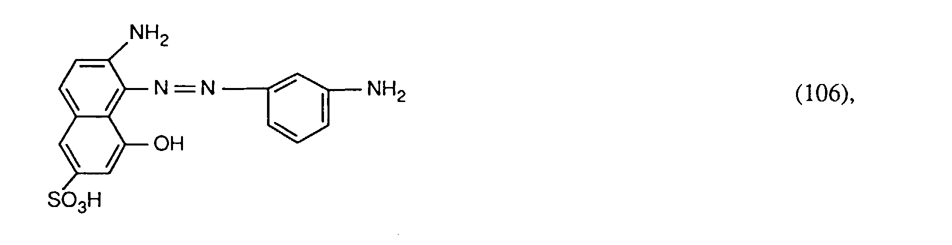 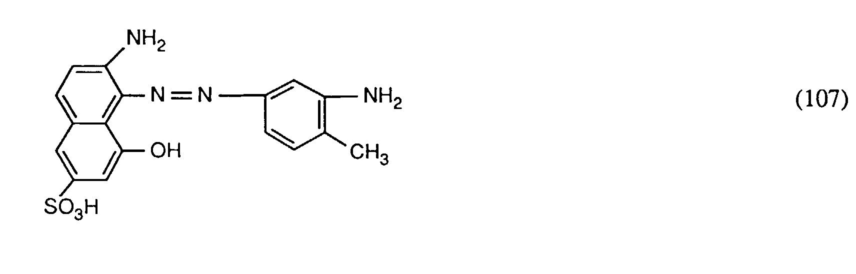 und 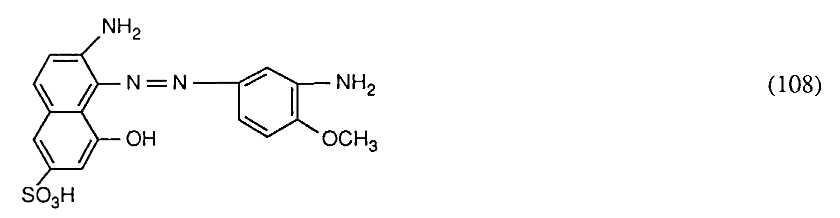 erhalten werden.

### Herstellungsbeispiel 2: 30 Teile 4-Aminoacetanilid werden nach Verrühren in 200 Teilen Wasser und 50 Teilen Salzsäure (32%) bei einer Temperatur von 5 bis 10°C mit 50 Teilen einer 4-normalen Natriumnitritlösung diazotiert. Mit wenig Sulfaminsäure wird überschüssiges Nitrit vernichtet.

Die so hergestellte Diazolösung wird zu einer zweiten Lösung, welche 59,9 Teile Phenyl-Perisäure und 600 Teile Wasser enthält und mit wässriger Natriumhydroxidlösung auf einen pH-Wert von 8 gestellt ist, zulaufen gelassen. Während des Zulaufs der Diazolösung wird der pH durch Zugabe wässriger Natriumhydroxidlösung bei einem Wert von 8 bis 9 gehalten. Anschliessend wird die erhaltene Verbindung durch Zugabe von Natriumchlorid ausgefällt, abfiltriert, mit wässriger Natriumchloridlösung gewaschen und im Vakuum bei einer Temperatur von 50 bis 60°C getrocknet. Man erhält 102 Teile einer Verbindung, welche in Form der freien Säure der Formel 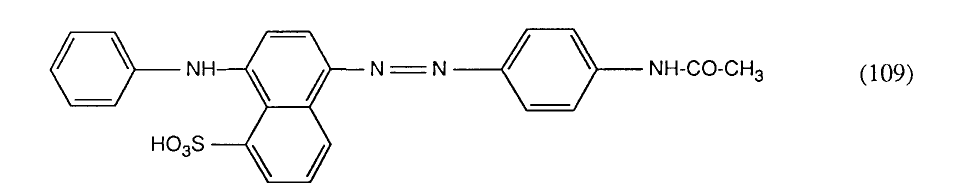 entspricht.

100 Teile der wie oben angegeben erhältlichen Verbindung der Formel (109) werden in 225 Teilen Wasser und 112 Teilen einer wässrigen Natriumhydroxidlösung (30%) siedend verseift. Die erhaltene Masse wird mit Wasser verdünnt, warm filtriert und mit wässriger Natriumchloridlösung (15%) gewaschen. Nach Trocknung im Vakuum bei einer Temperatur von 50 bis 60°C erhält man 75 Teile einer Verbindung, welche in Form der freien Säure der Formel 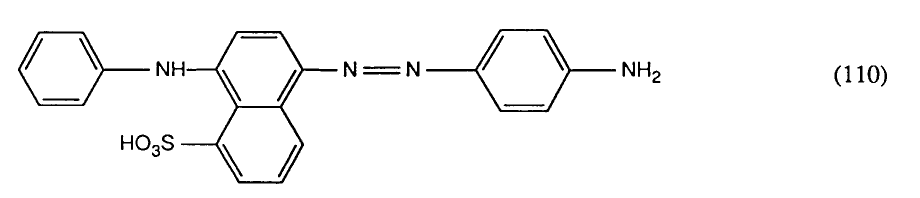 entspricht.

In analoger Weise zu Herstellungsbeispiel 2 können die Verbindungen der Formeln 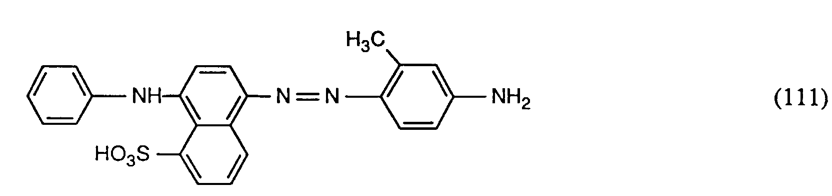 und 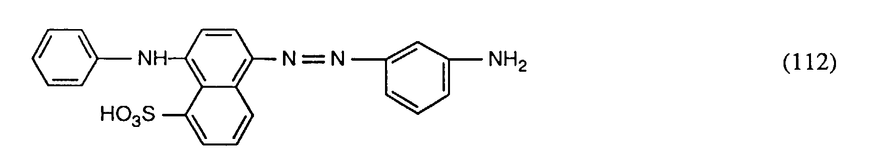 erhalten werden.

### Herstellungsbeispiel 3: 11,14 Teile 1-Naphthylamin-5-sulfonsäure werden in 100 Teilen Wasser bei Raumtemperatur und einem pH-Wert von 7 bis 8 gelöst. Nach der Zugabe von 12,5 Teilen 4-normaler Natriumnitritlösung tropft man die so erhaltene Lösung zu einer Mischung bestehend aus 100 Teilen Eis und 12,5 Teilen Salzsäure (32%). Nach einiger Zeit wird überschüssiges Nitrit mit Sulfaminsäure zerstört.

Zur Herstellung einer zweiten Lösung werden 10,85 Teile 2-Methoxyanilinomethansulfonsäure in 100 Teilen Wasser und einem pH-Wert von 8 gelöst. Nach Beimischung von 6,3 Teilen Natriumhydrogencarbonat lässt man die wie oben angegeben erhältliche Lösung der Diazokomponente zutropfen und hält den pH durch Zugabe von weiteren 1,8 Teilen Natriumhydrogencarbonat bei einem Wert von 6,5 bis 7. Anschliessend wird die erhaltene Verbindung durch Zugabe von Natriumchlorid ausgefällt und abfiltriert. Man erhält 72 Teile einer Verbindung, welche in Form der freien Säure der Formel 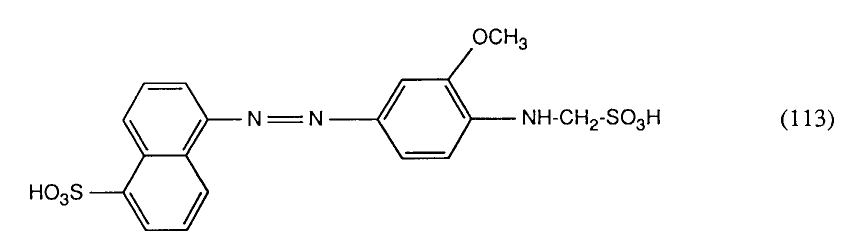 entspricht.

72 Teile der wie oben angegeben erhältlichen Verbindung der Formel (113) werden in 200 Teilen Wasser verrührt und mit 20 Teilen Natriumhydroxid versetzt. Nach der Verseifung bei Siedetemperatur wird mit 45 Teilen Salzsäure (32%) ein pH-Wert von 10 eingestellt, die erhaltene Verbindung bei Raumtemperatur abfiltriert, mit einer wässrigen Natriumchloridlösung gewaschen und im Vakuum bei einer Temperatur von 50 bis 60°C getrocknet. Man erhält 16 Teile einer Verbindung, welche in Form der freien Säure der Formel 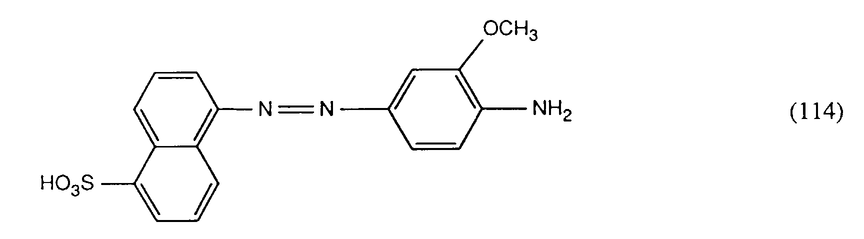 entspricht.

In analoger Weise zu Herstellungsbeispiel 3 können die Verbindungen der Formeln 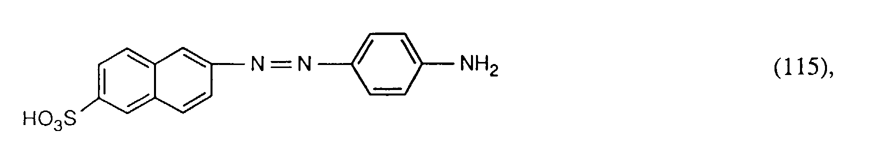 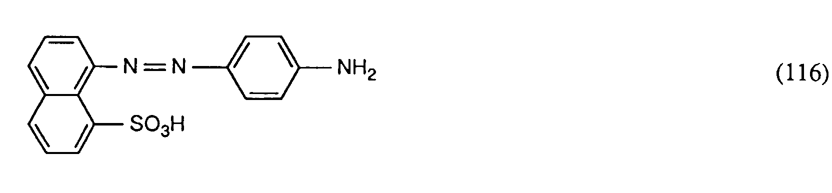 und 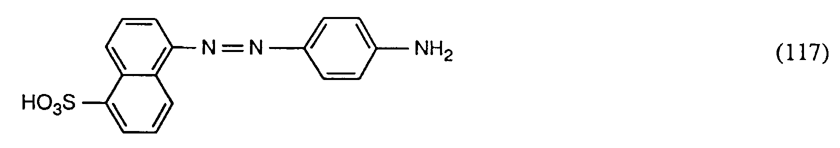 erhalten werden.

### Beispiel 1: 3,58 Teile der Verbindung der Formel

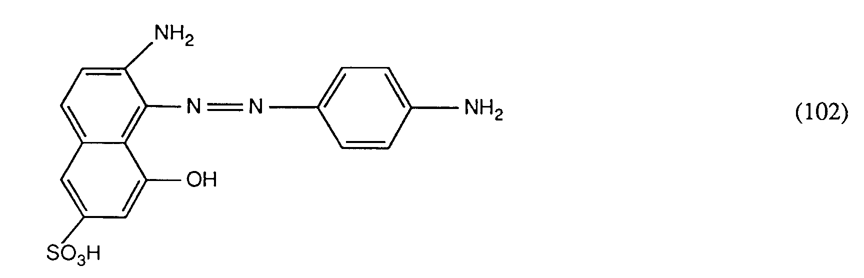

werden in 50 Teilen warmem Wasser neutral gelöst und mit 2,5 Teilen einer 4-normalen Natriumnitritlösung versetzt. Die so erhaltene Lösung gibt man zu einer Mischung von 50 Teilen Eis und 3 Teilen Salzsäure (32%). Nach einiger Zeit wird der Nitritüberschuss mit Sulfaminsäure zerstört.

Die so erhaltene Suspension der Diazokomponente gibt man zu einer zweiten Lösung, welche 0,94 Teile Phenol und 50 Teile Wasser enthält, zu. Hierbei wird durch Zugabe einer wässrigen Natriumhydroxidlösung ein pH-Wert von 9 eingehalten. Nach beendeter Kupplung wird der ausgefällte Farbstoff filtriert, mit verdünnter Natriumchloridlösung gewaschen und im Vakuum bei einer Temperatur von 50 bis 60°C getrocknet. Man erhält 4,3 Teile eines Farbstoffs, welcher in Form der freien Säure der Verbindung der Formel 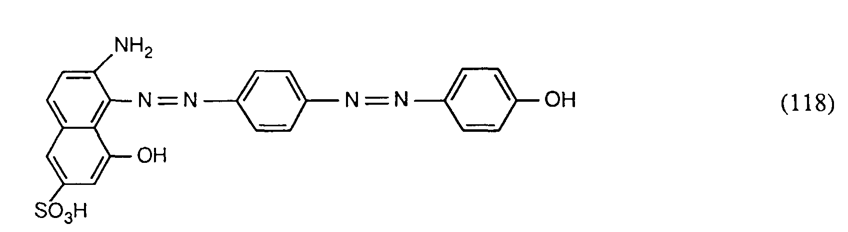 enspricht. Der Farbstoff der Formel (118) färbt Wolle und synthetisches Polyamidfasermaterial in bordeaux-roten Farbtönen.

### Beispiele 2 bis 139: Analog zu den Angaben in Beispiel 1 können die in der folgenden Tabelle 1 in Spalte 2 in Form der freien Säure angegebenen Farbstoffe erhalten werden. Die in Tabelle 1 in Spalte 2 angegebenen Farbstoffe färben Wolle und synthetisches Polyamidfasermaterial in den in Tabelle 1 in Spalte 3 angegebenen Farbtönen.

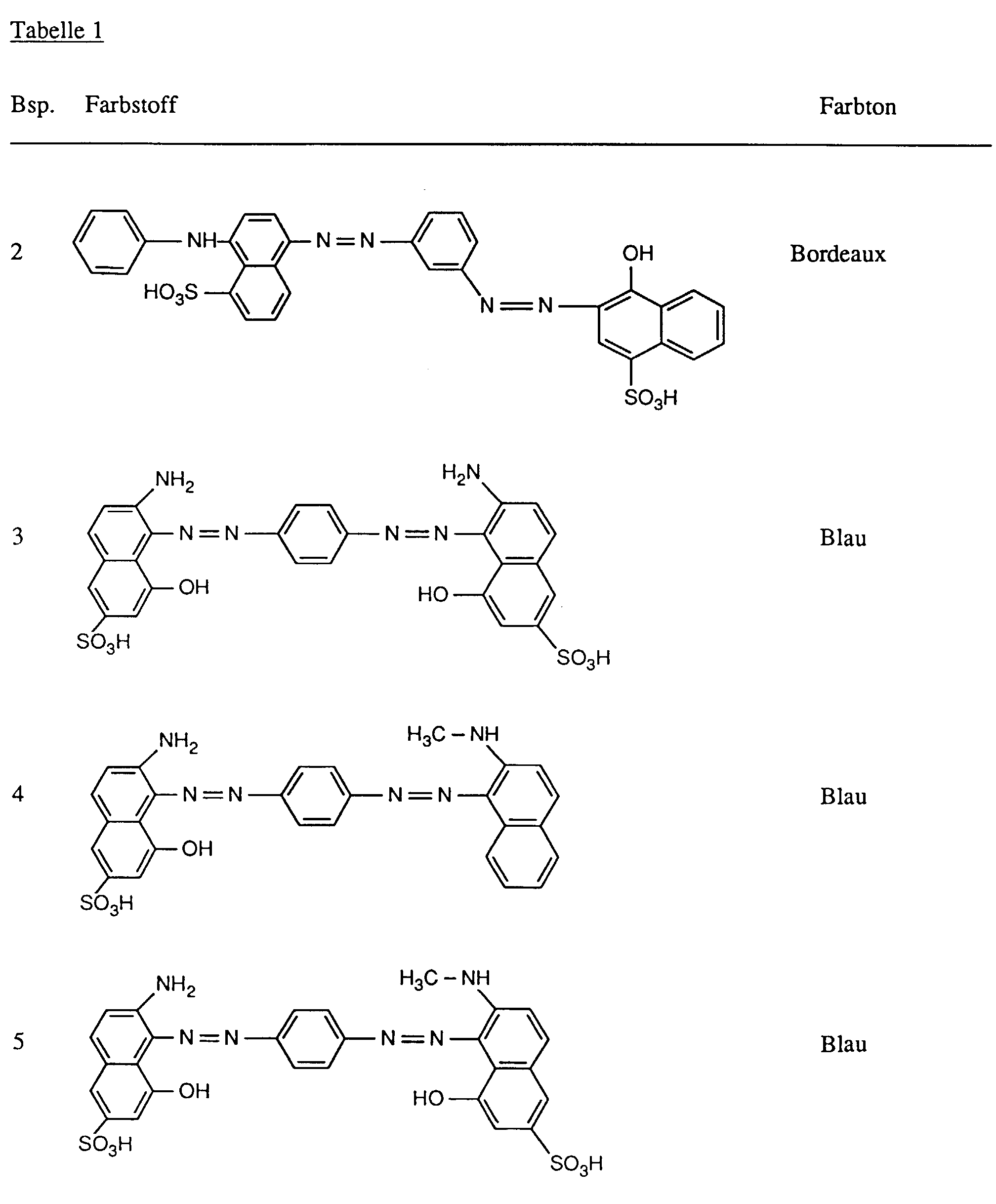

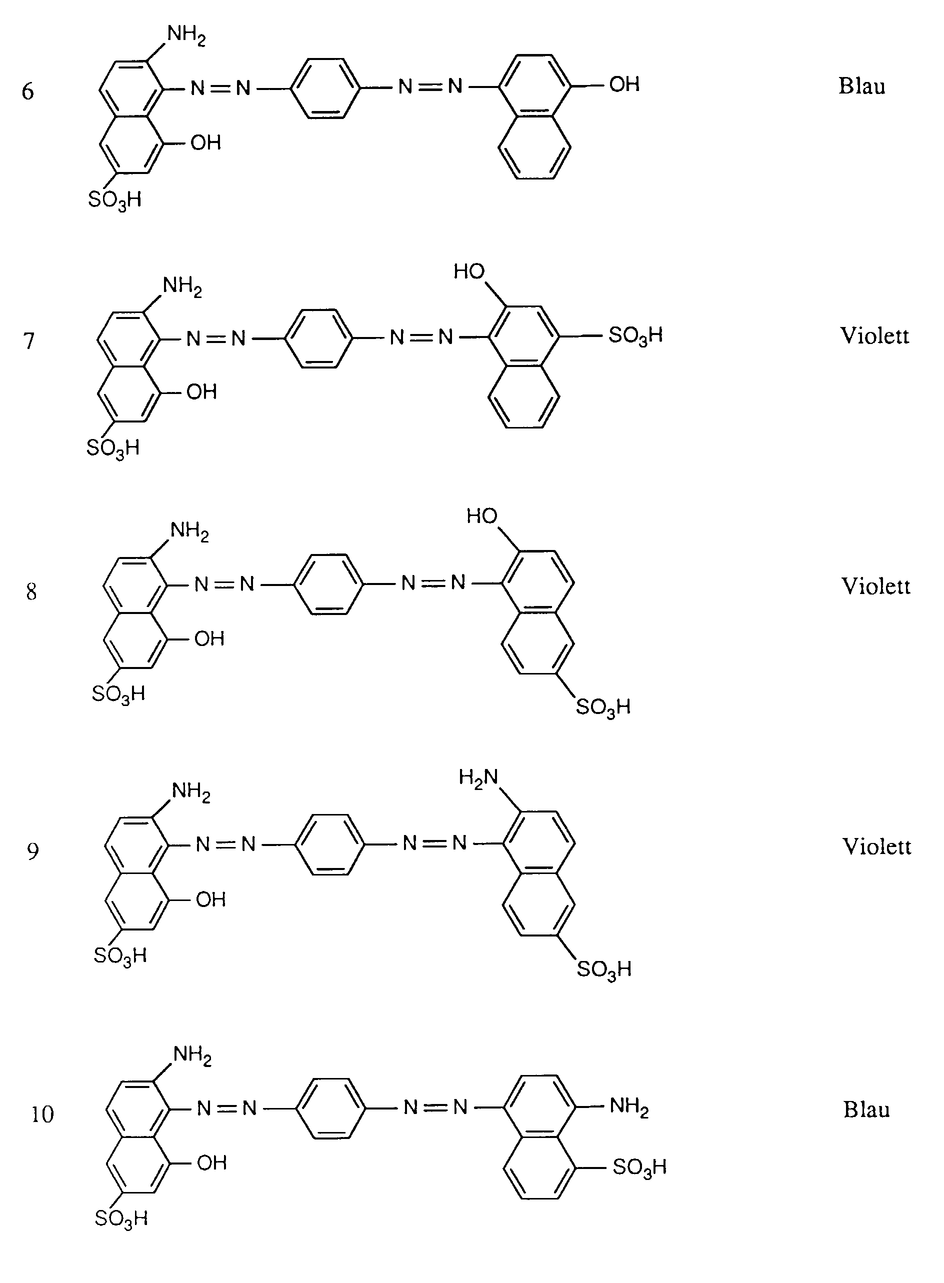

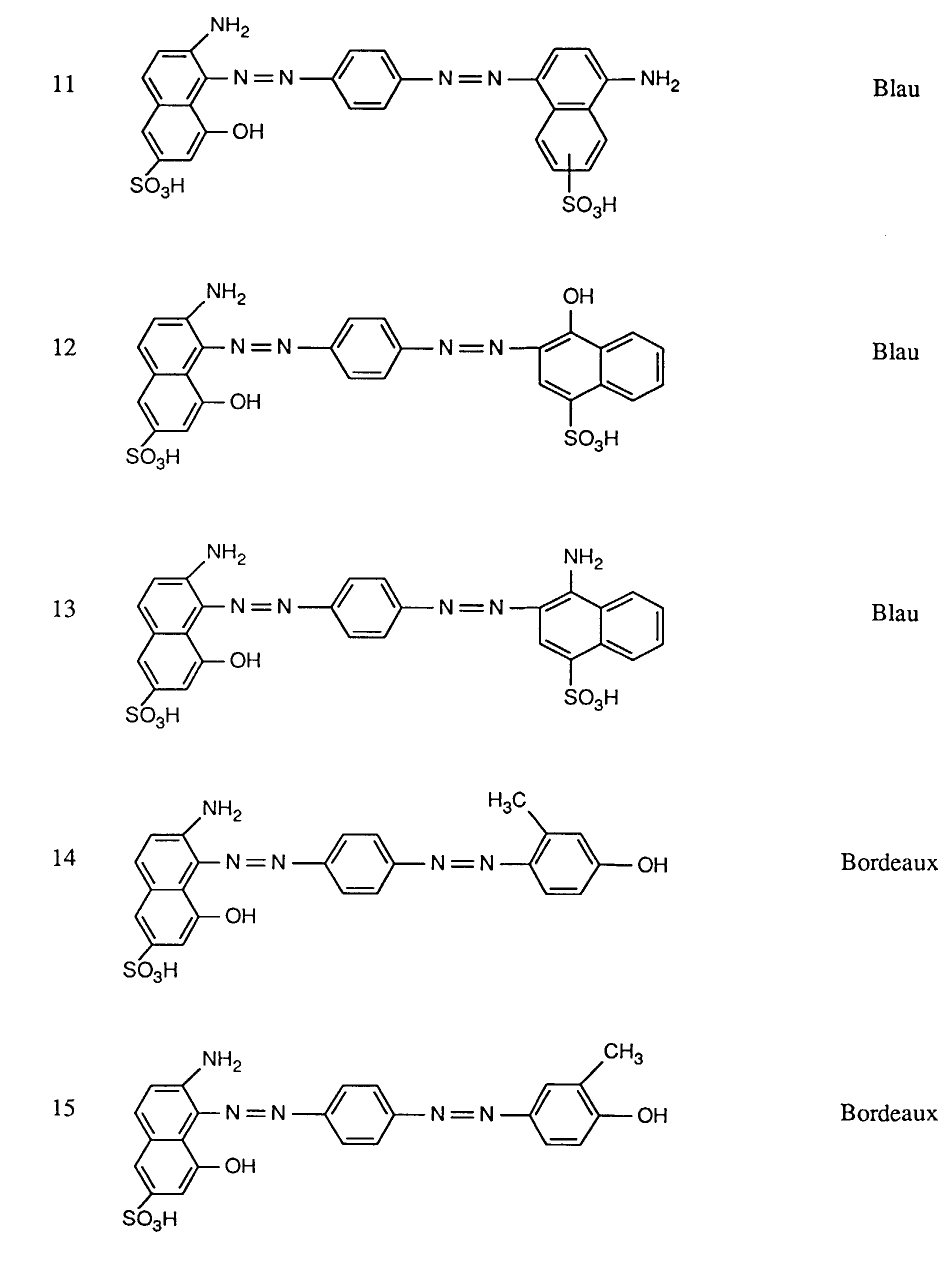

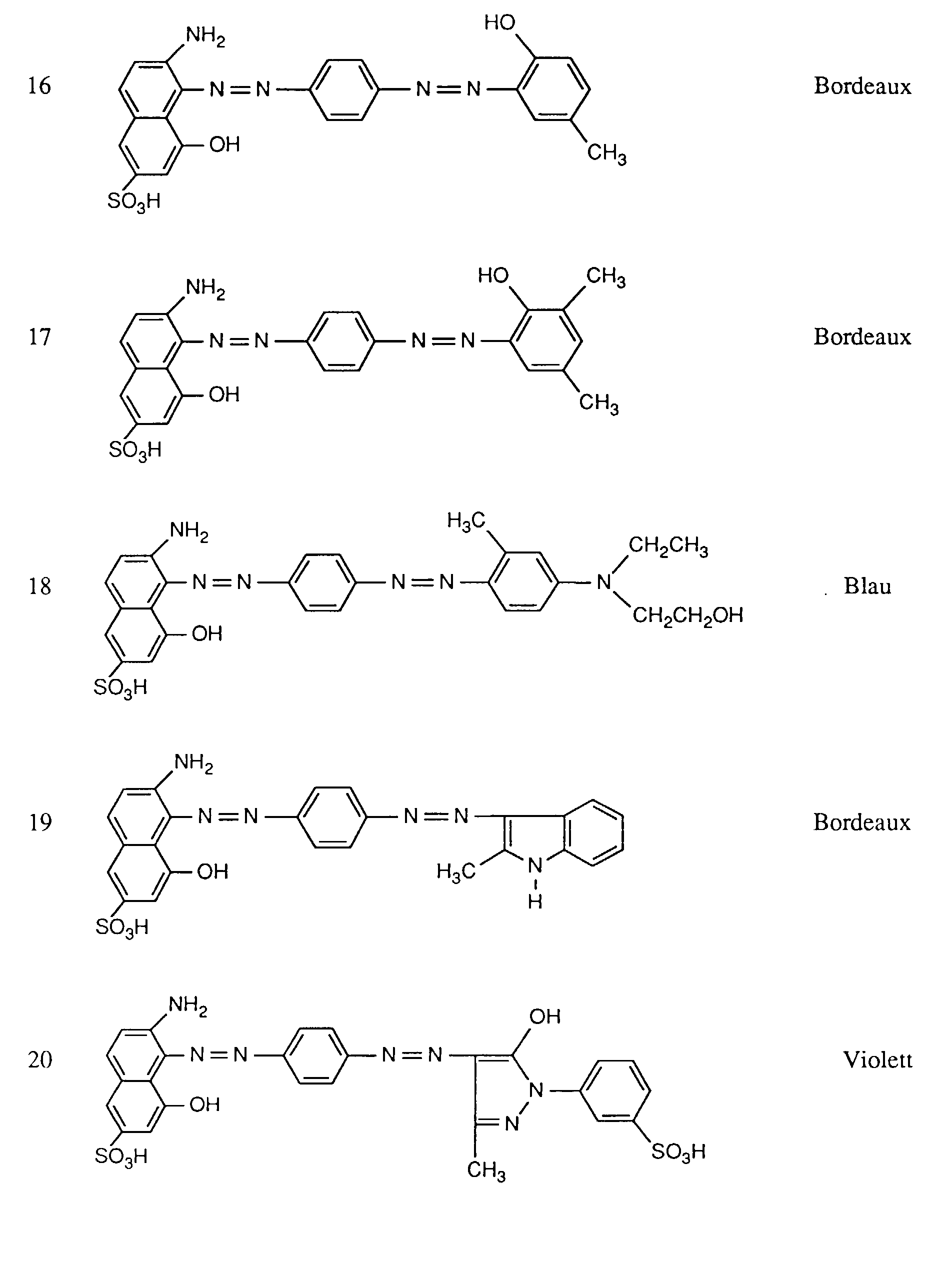

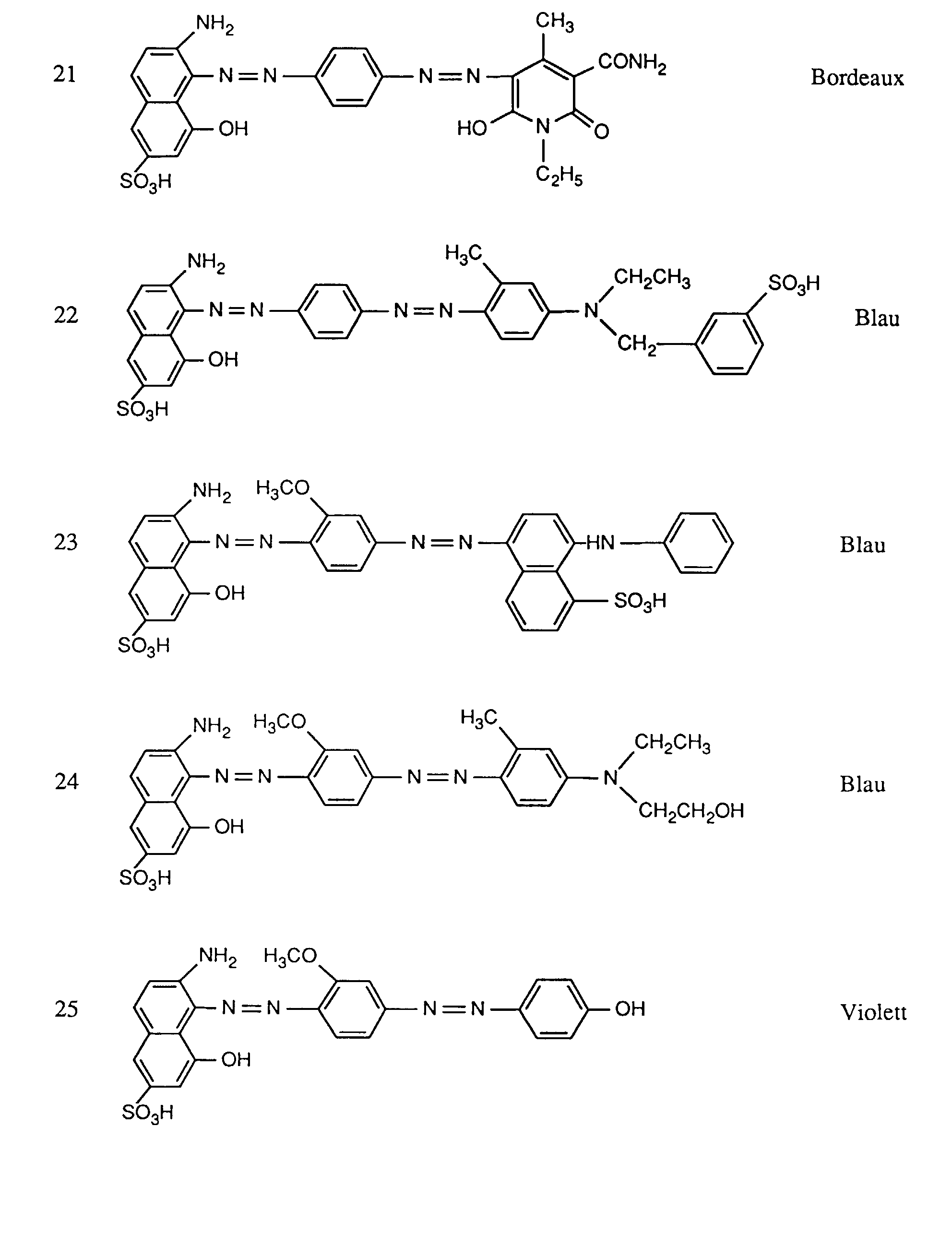

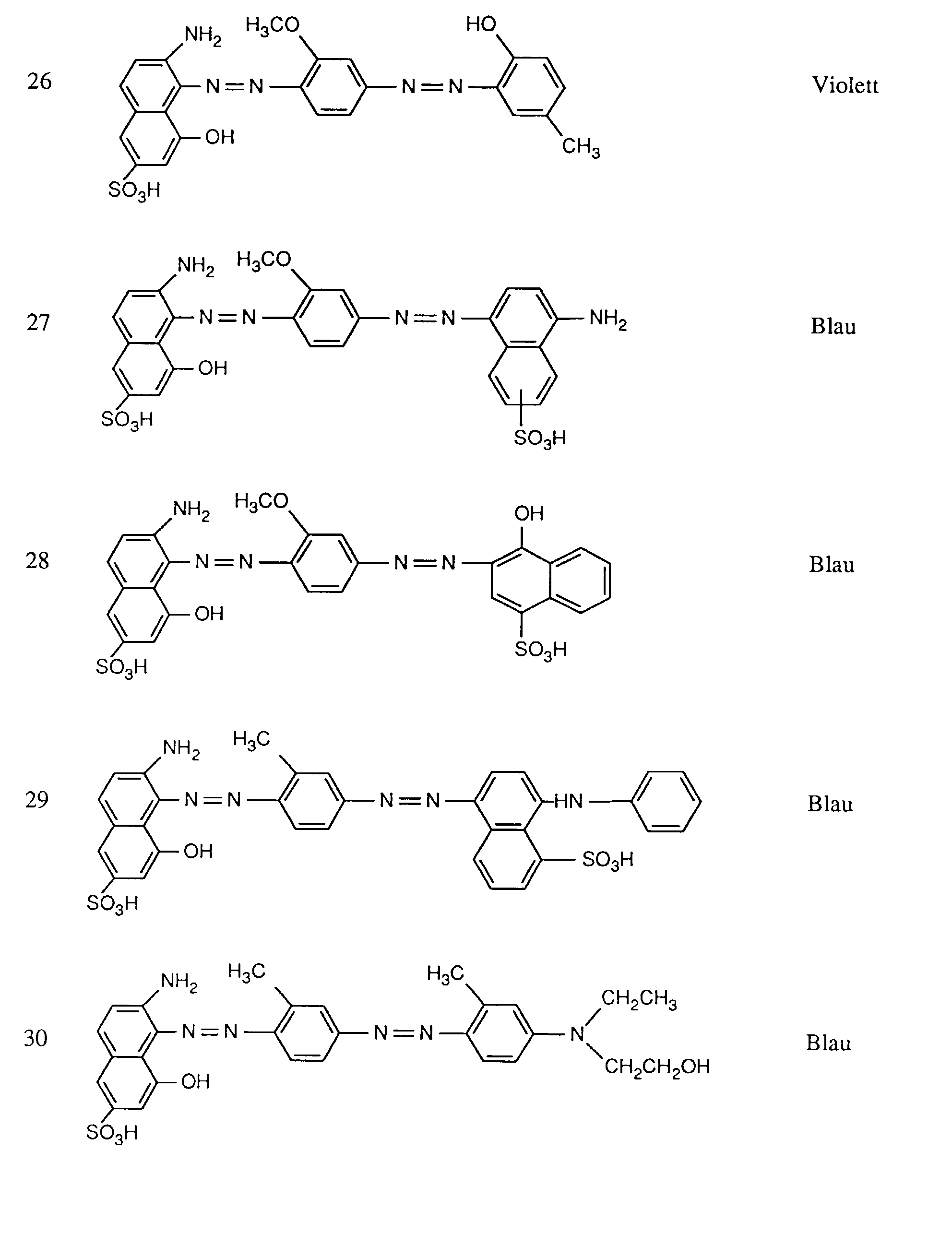

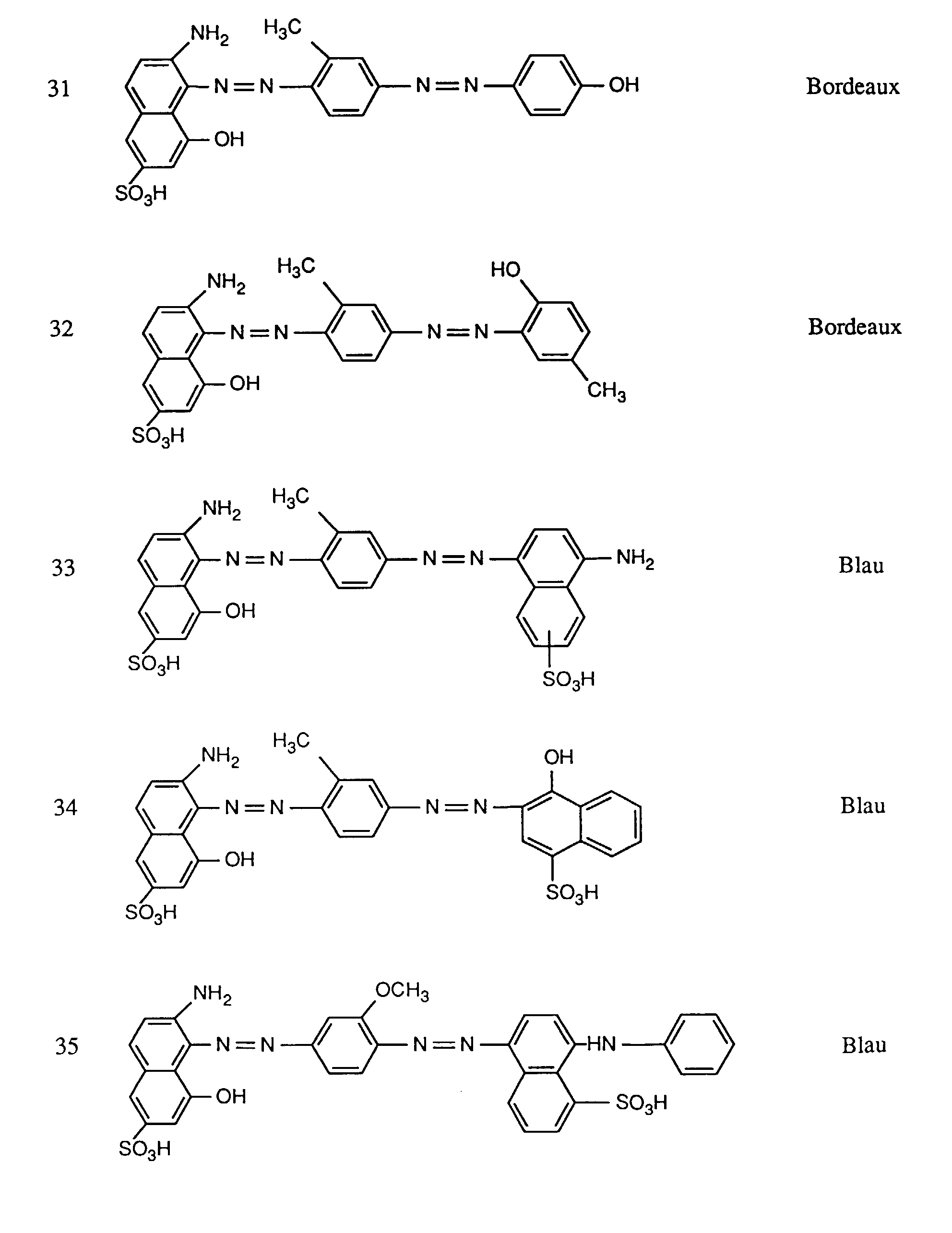

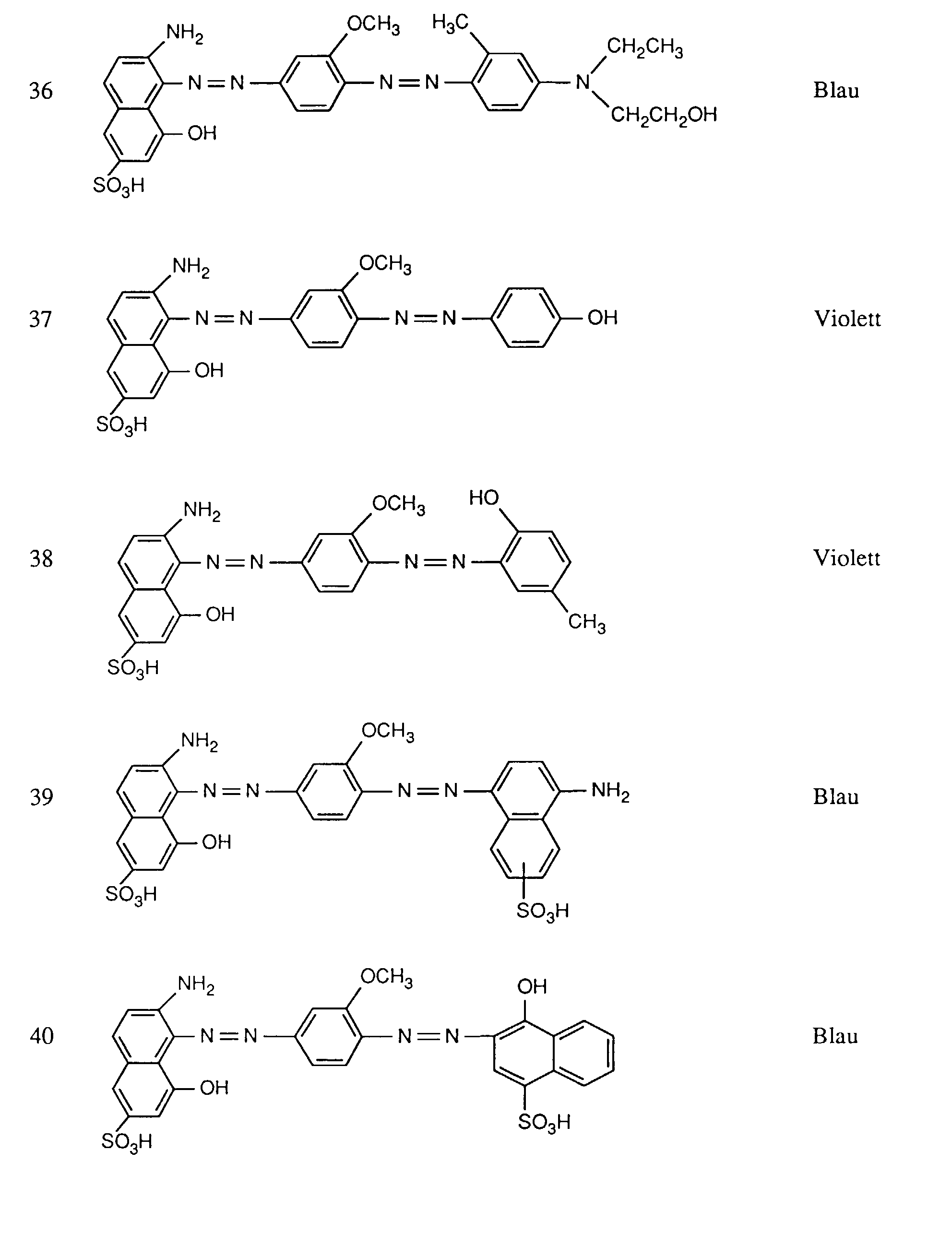

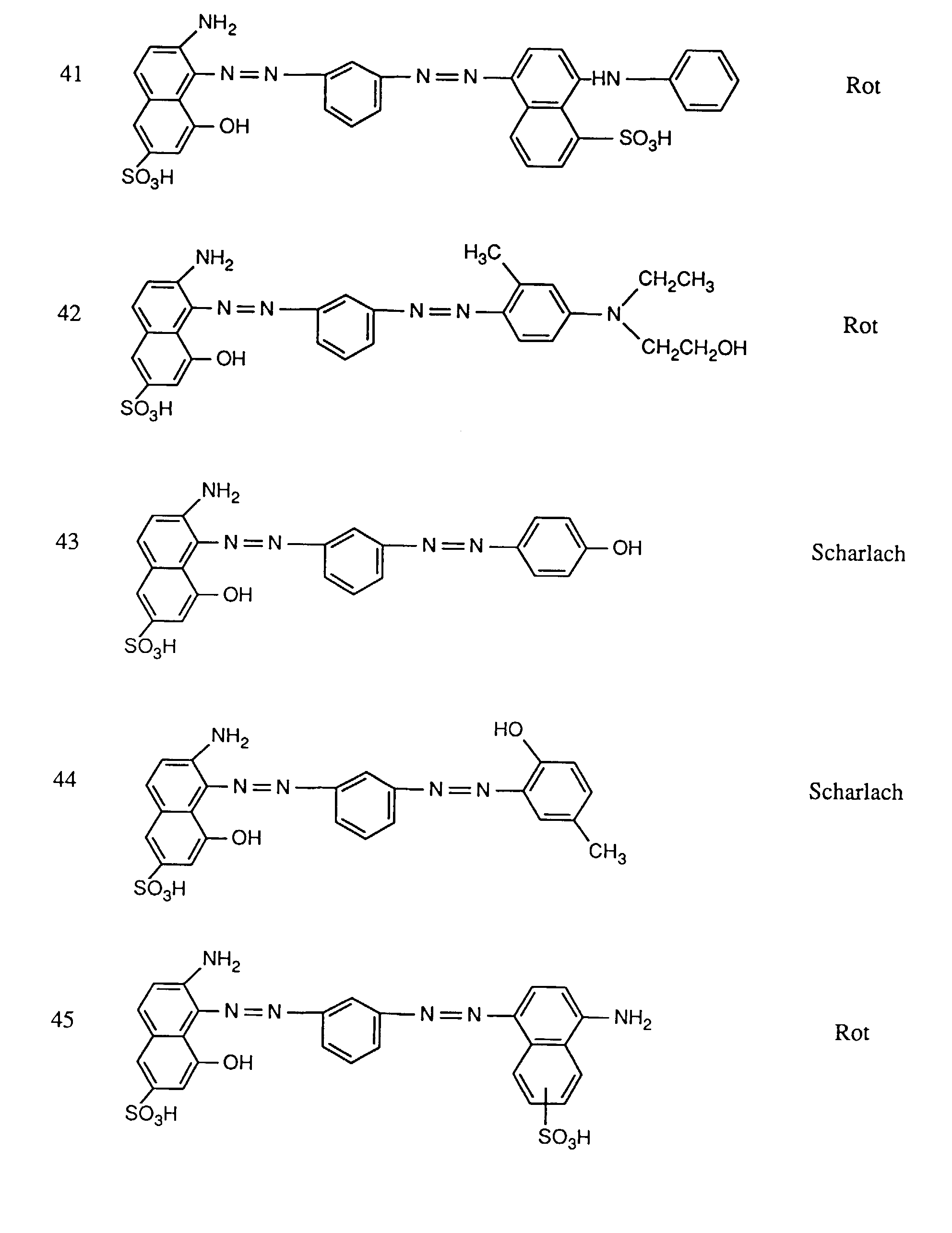

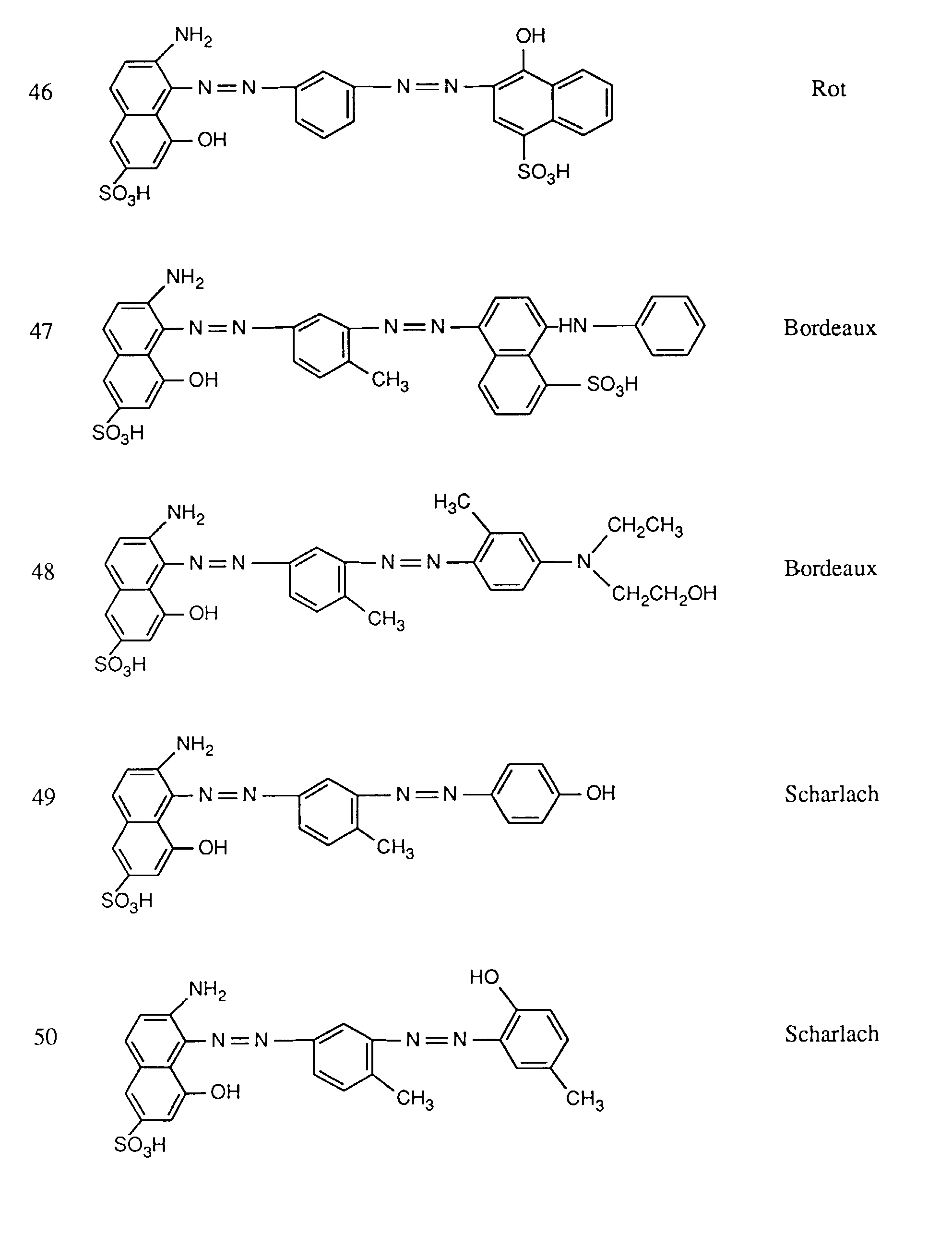

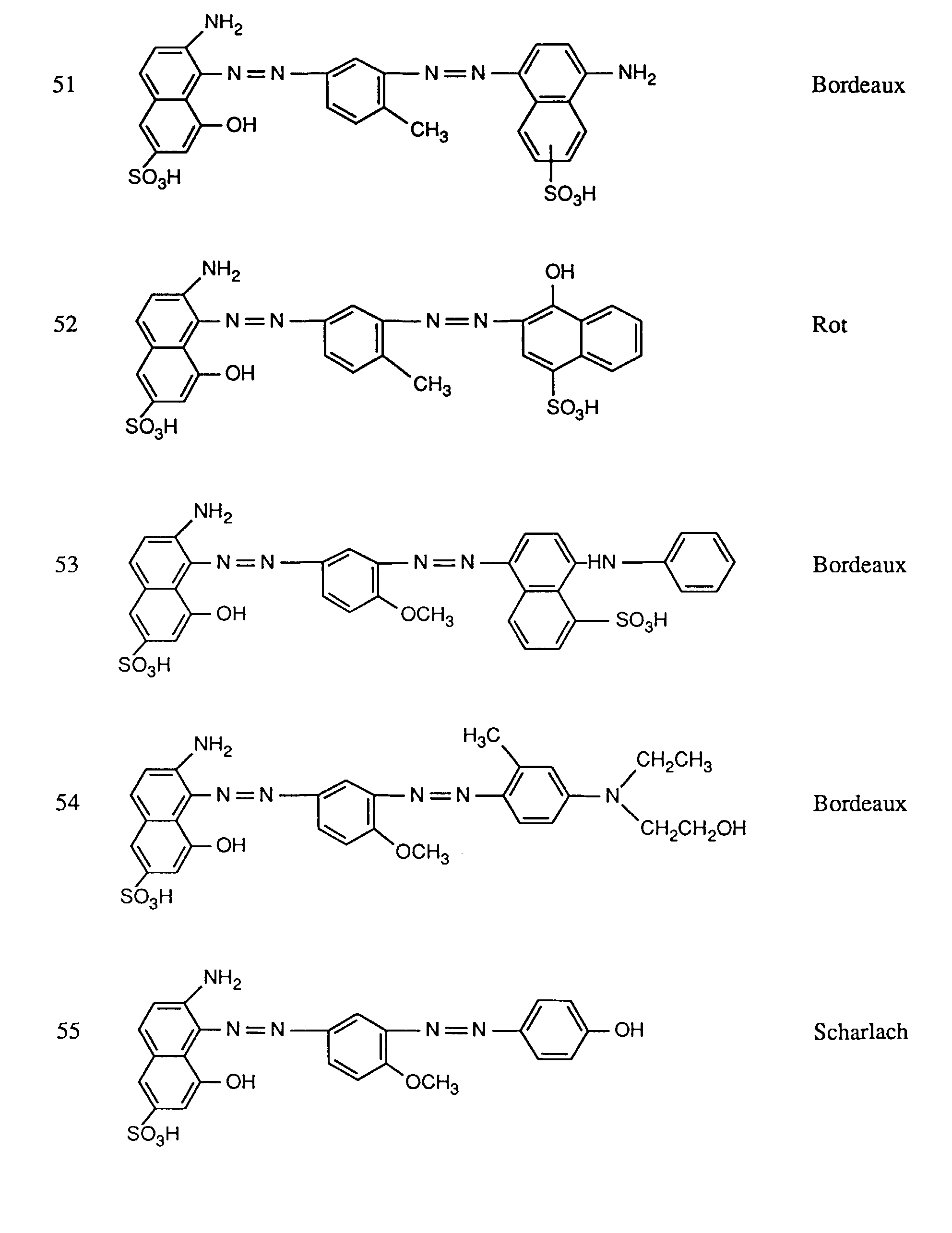

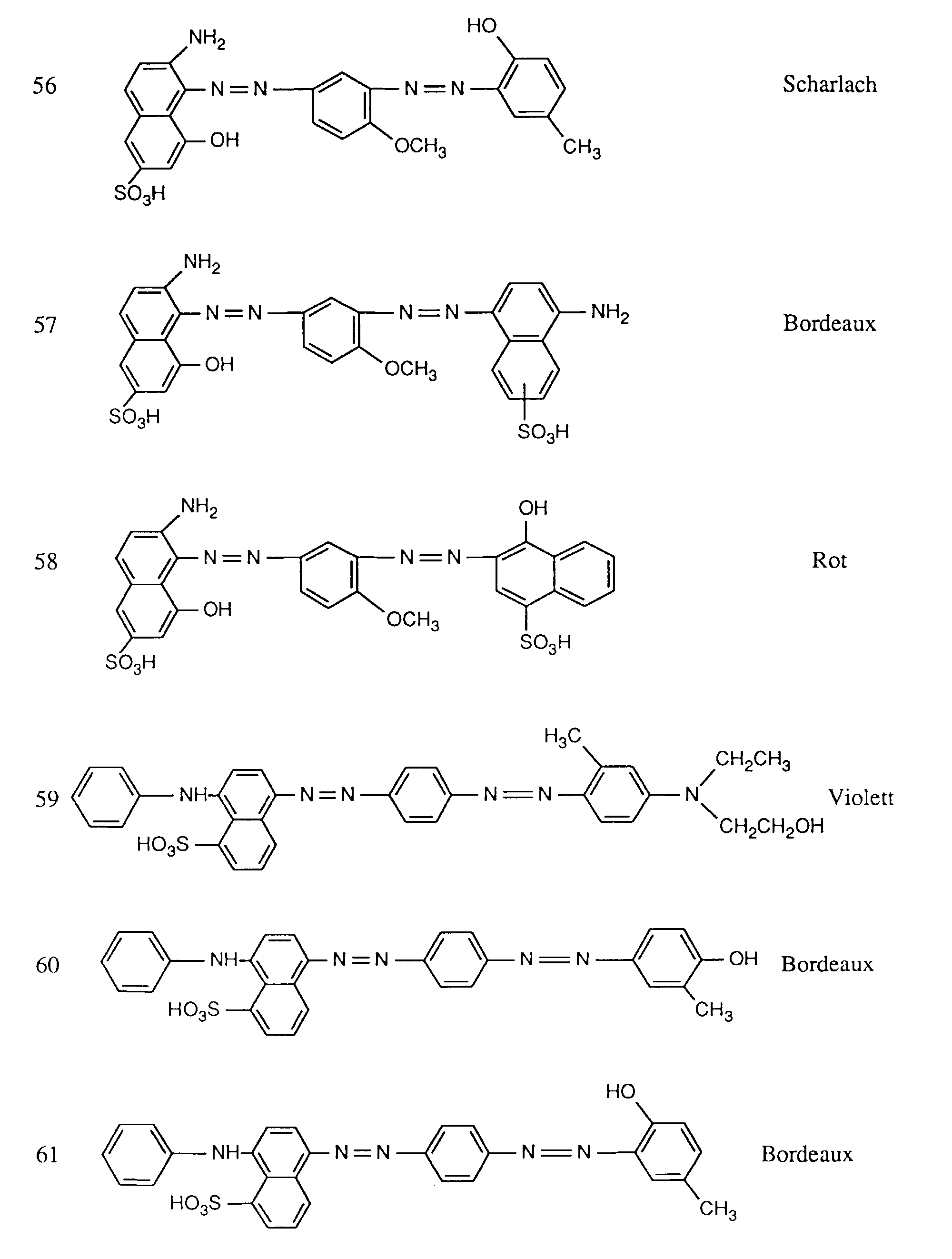

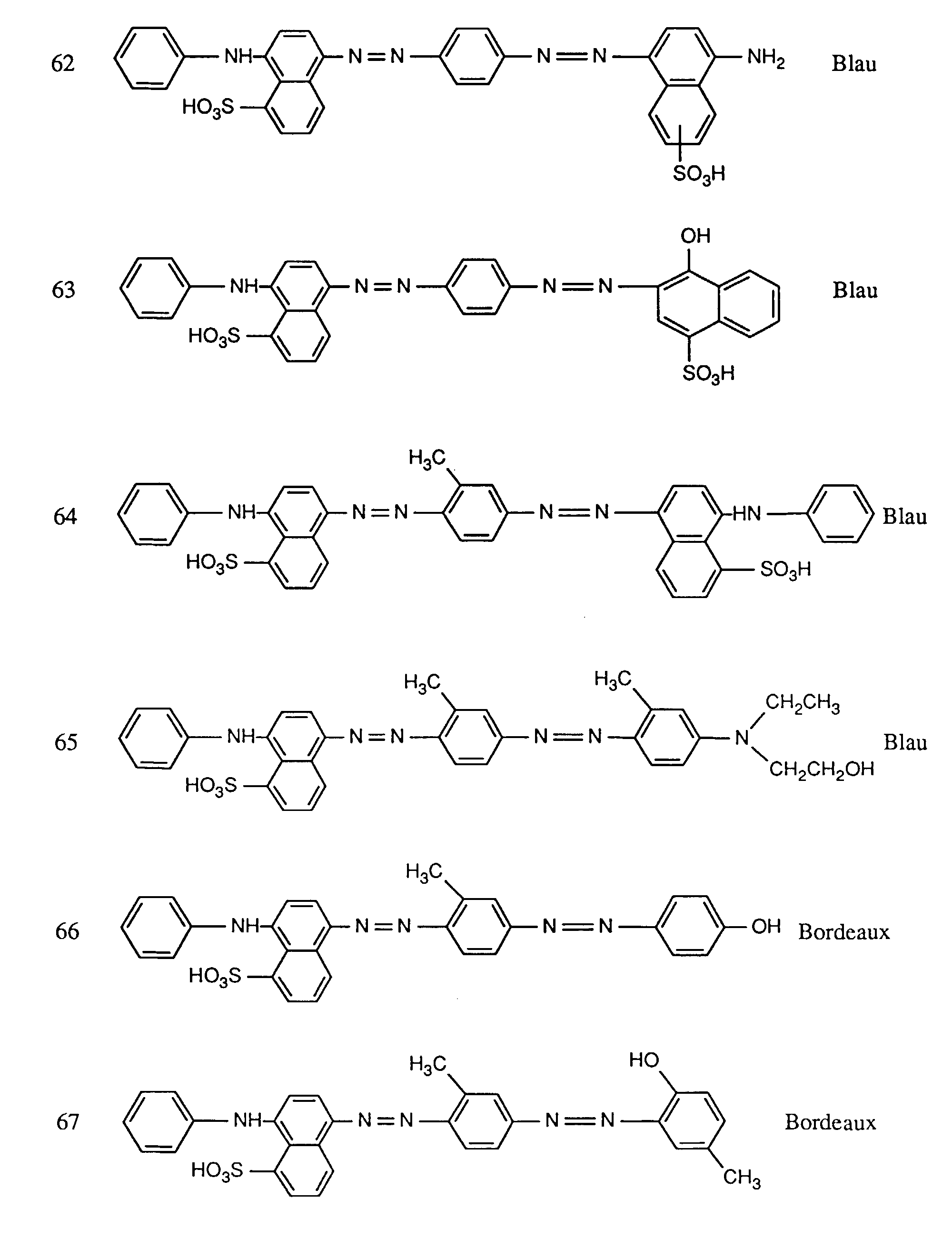

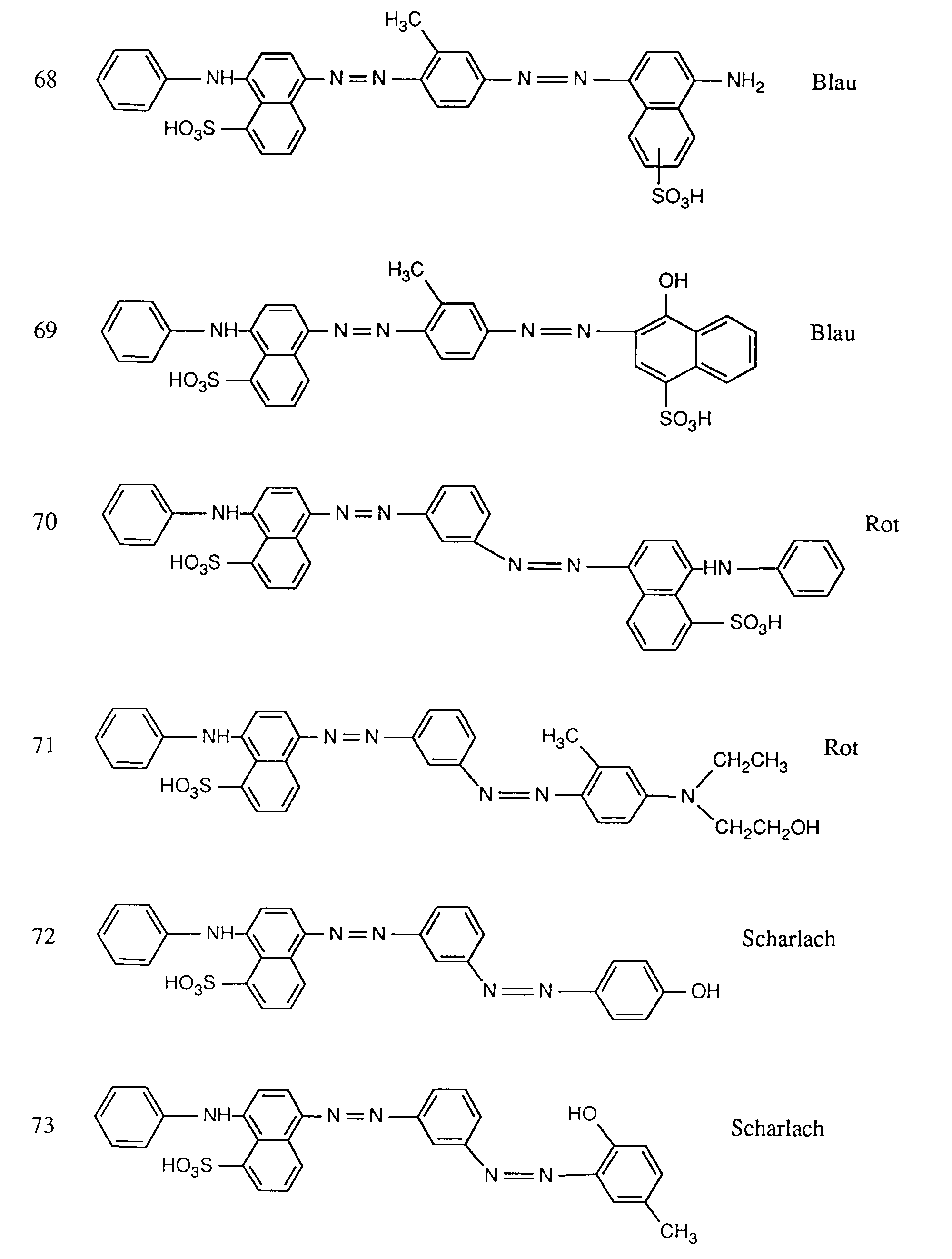

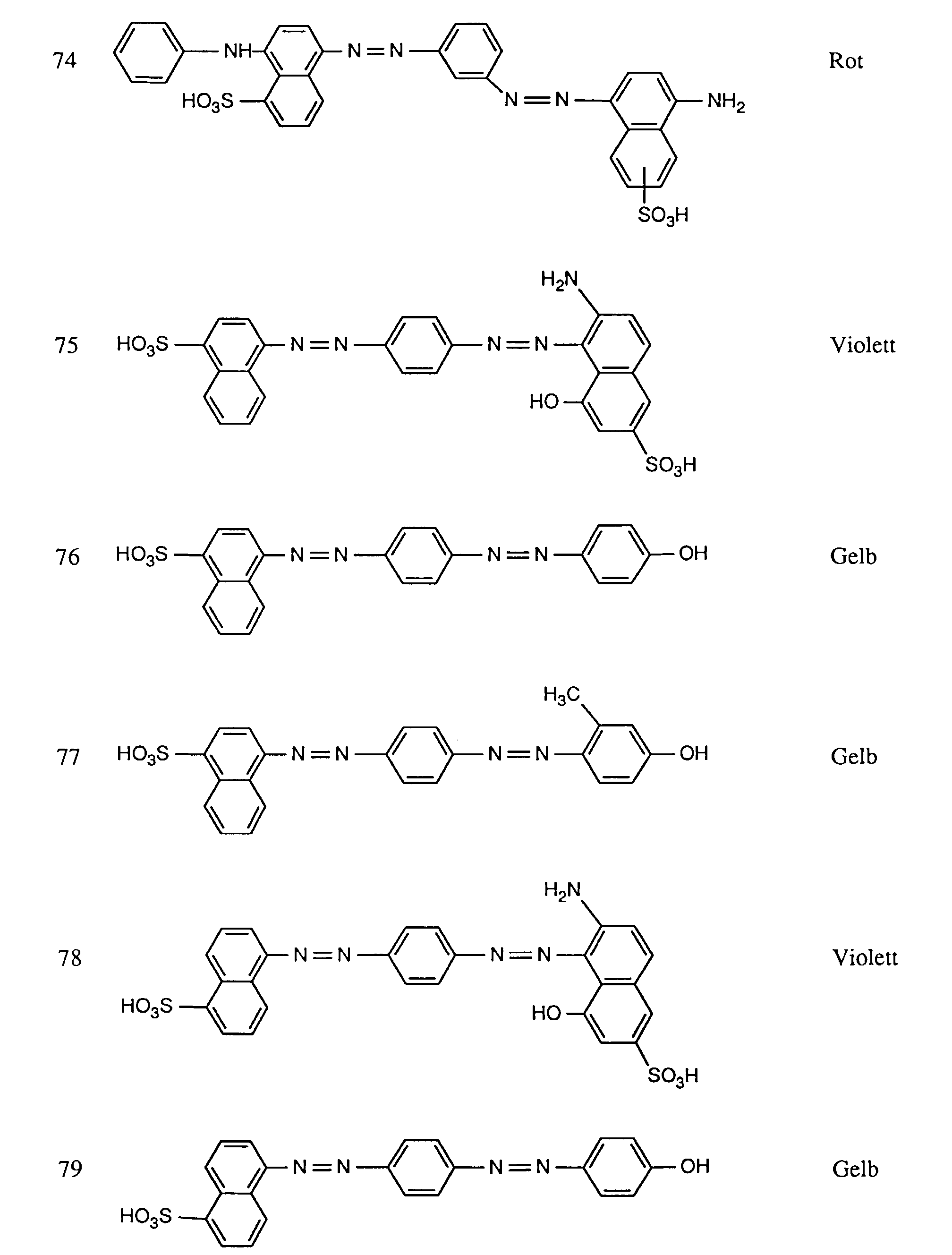

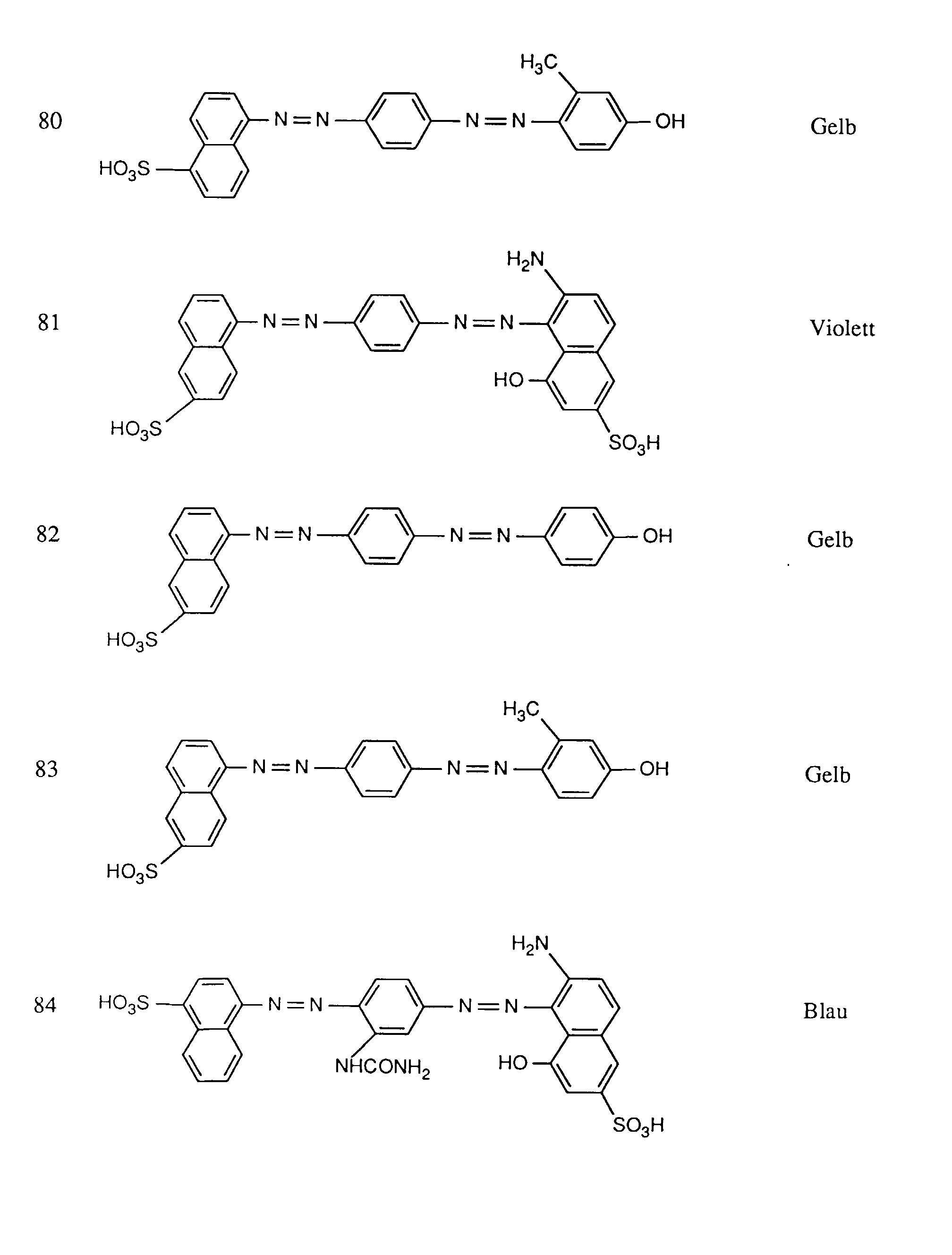

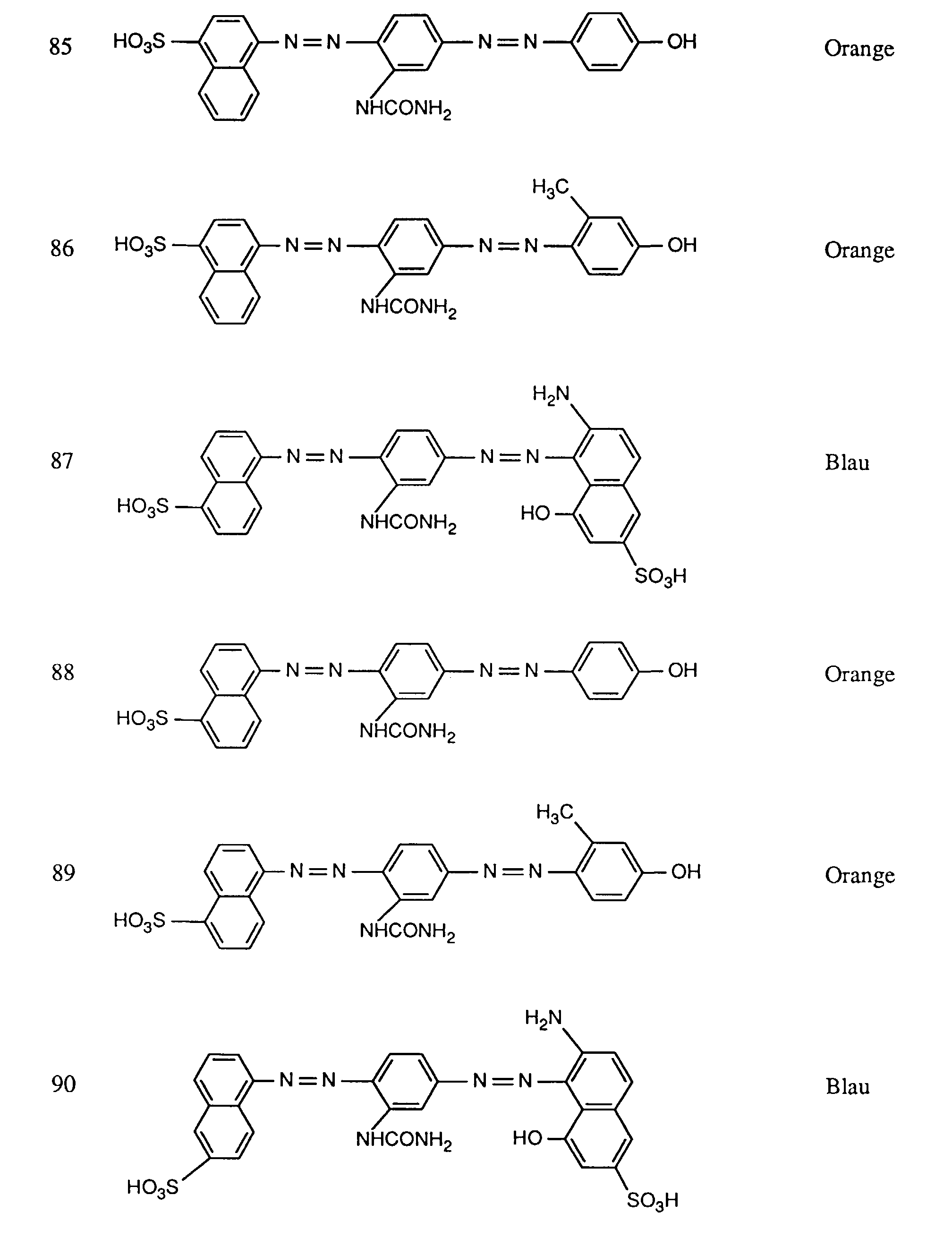

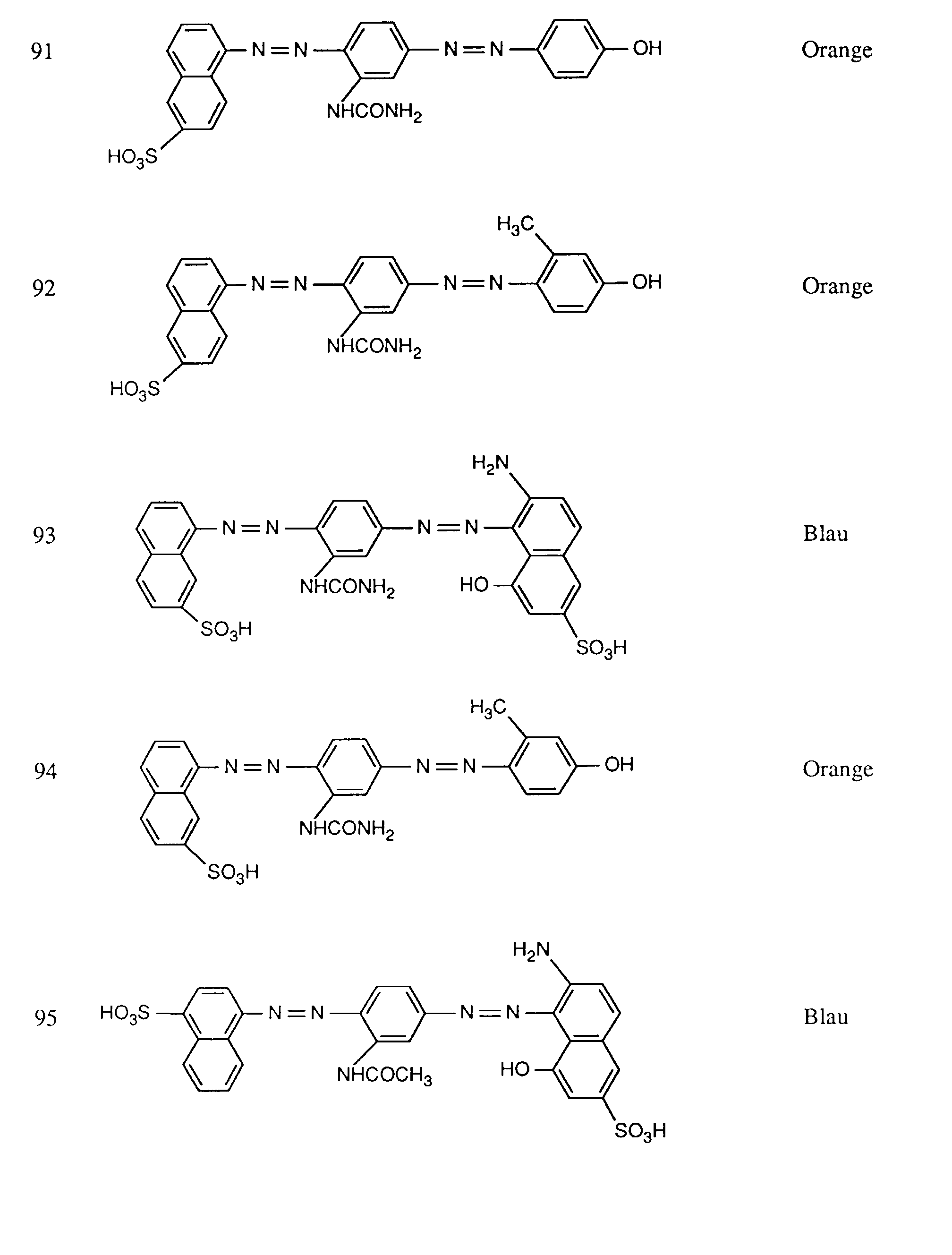

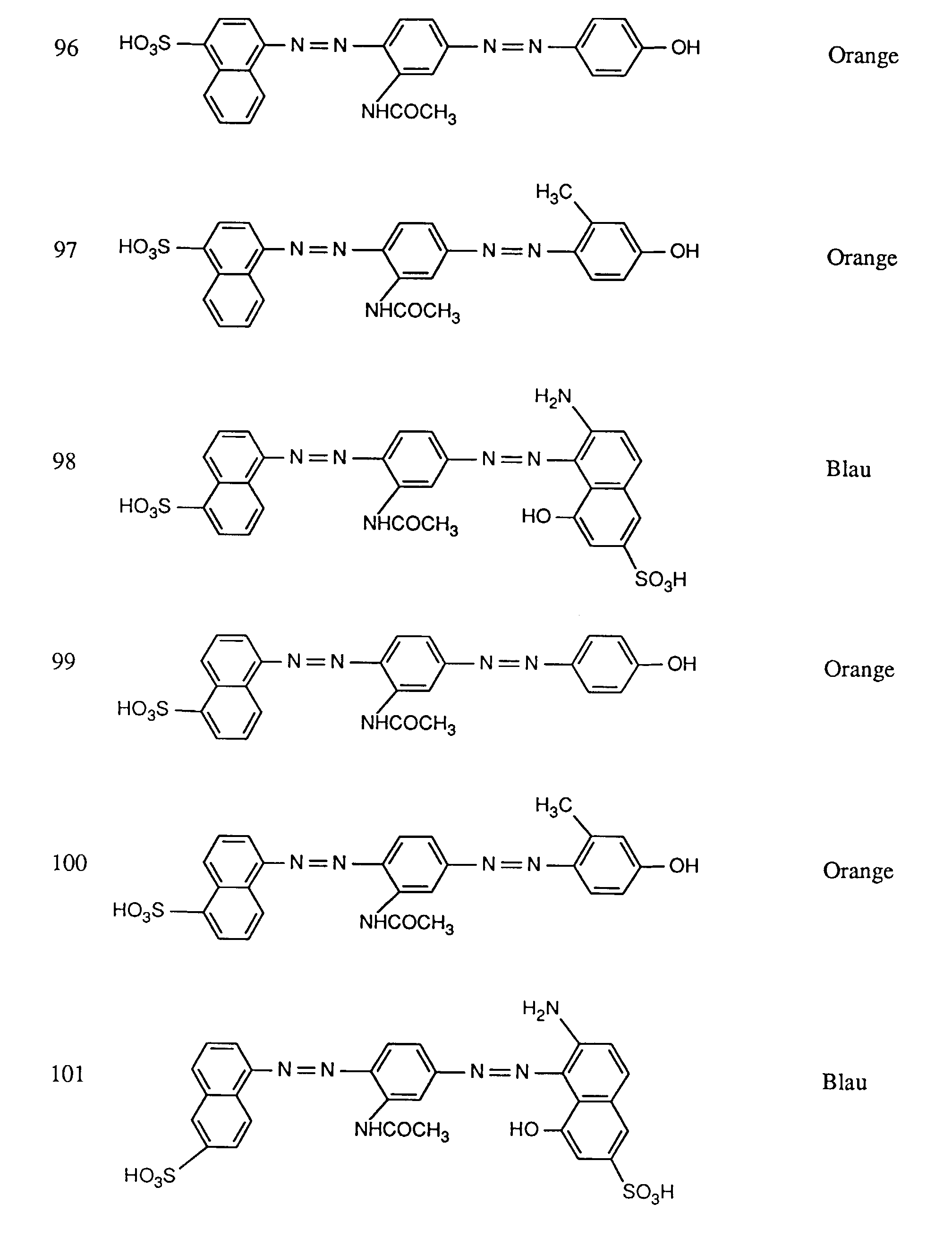

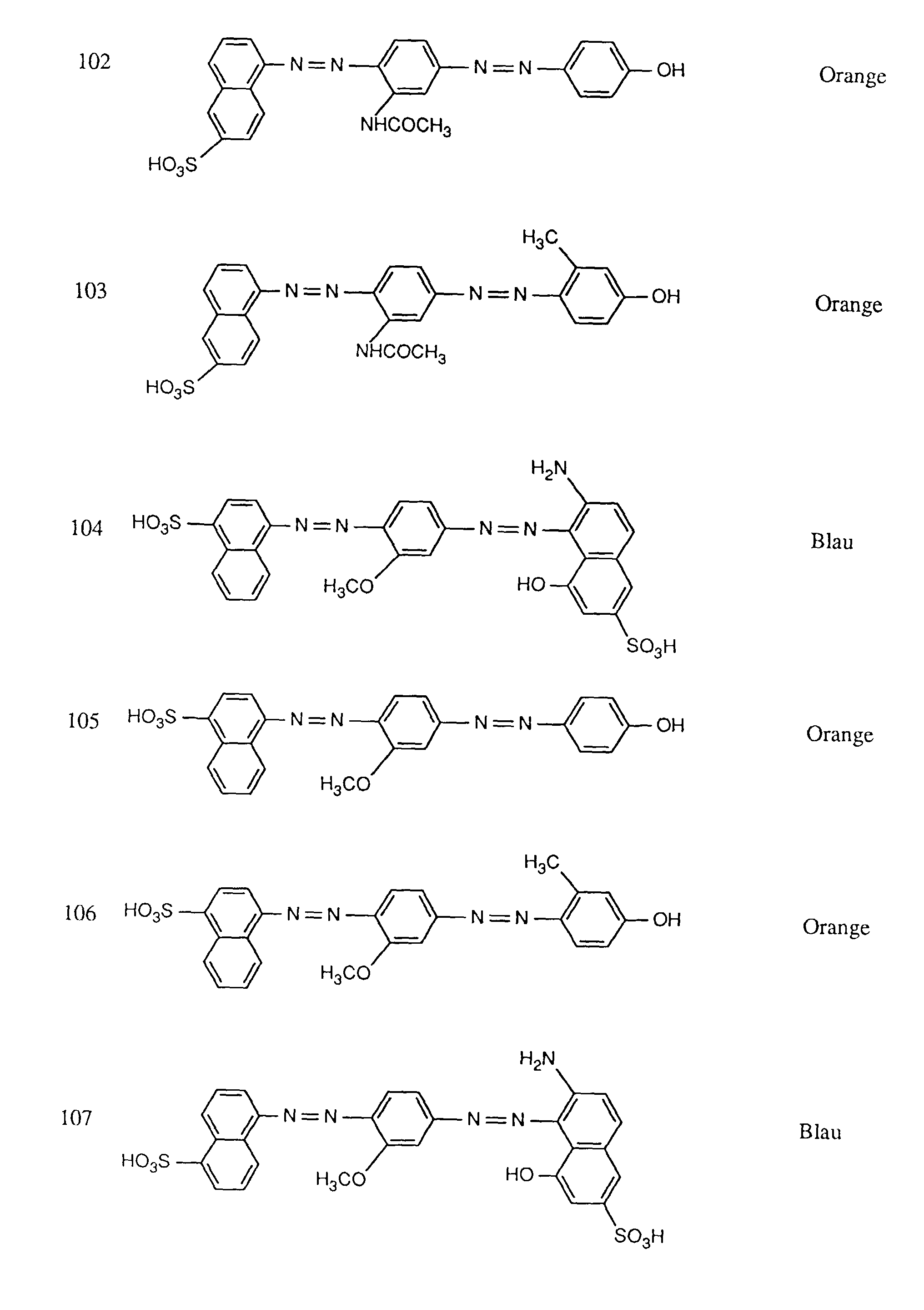

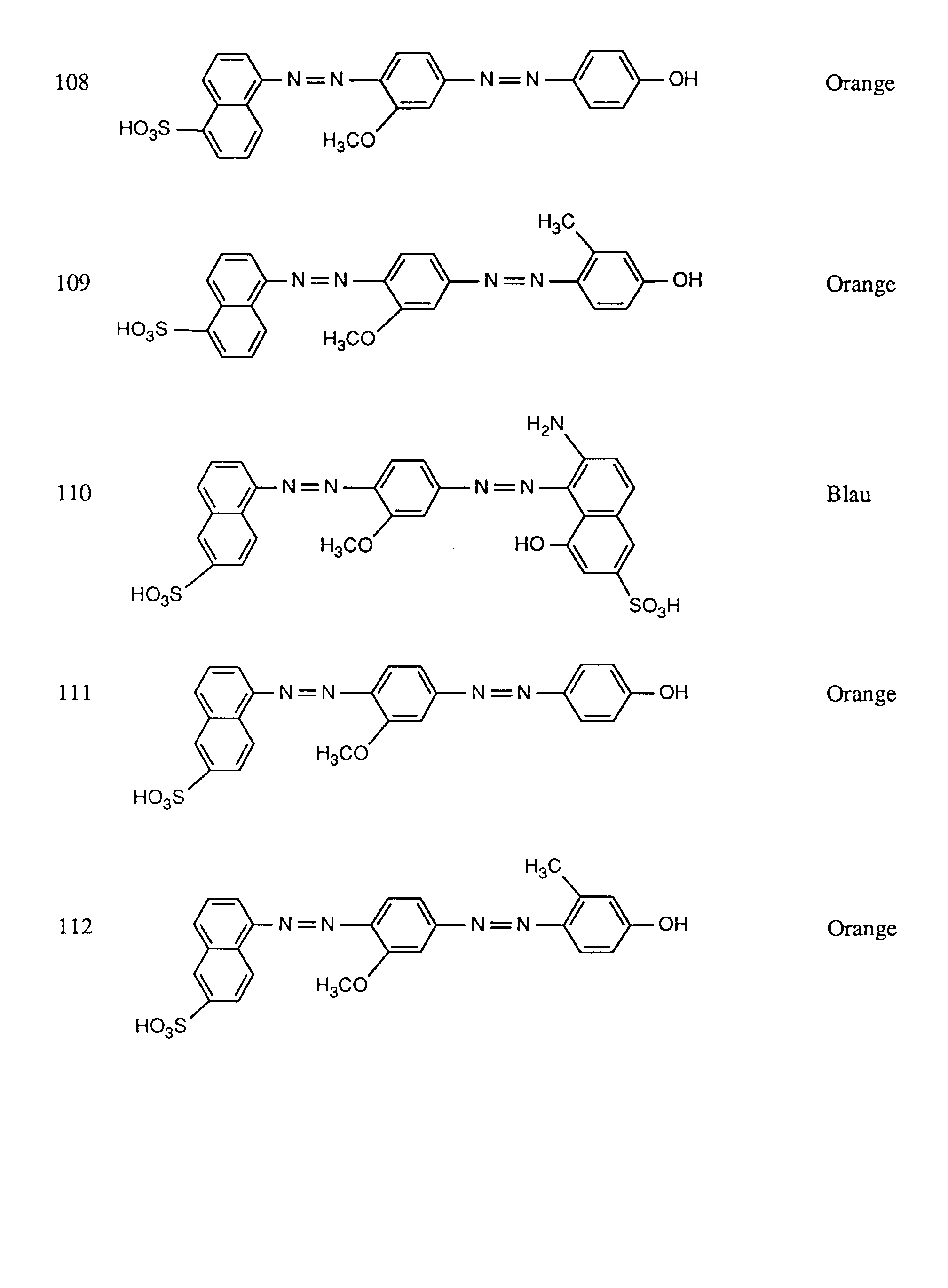

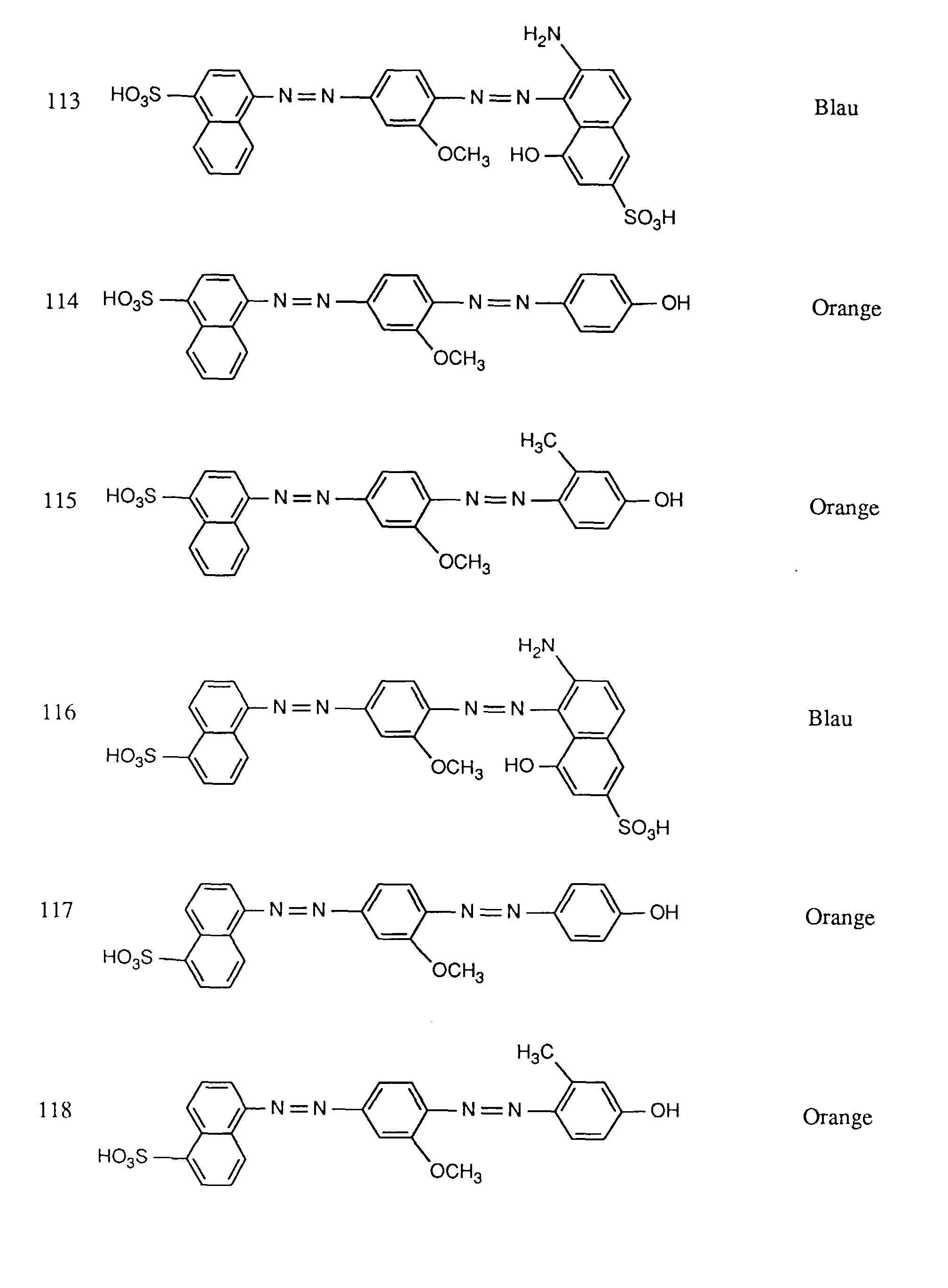

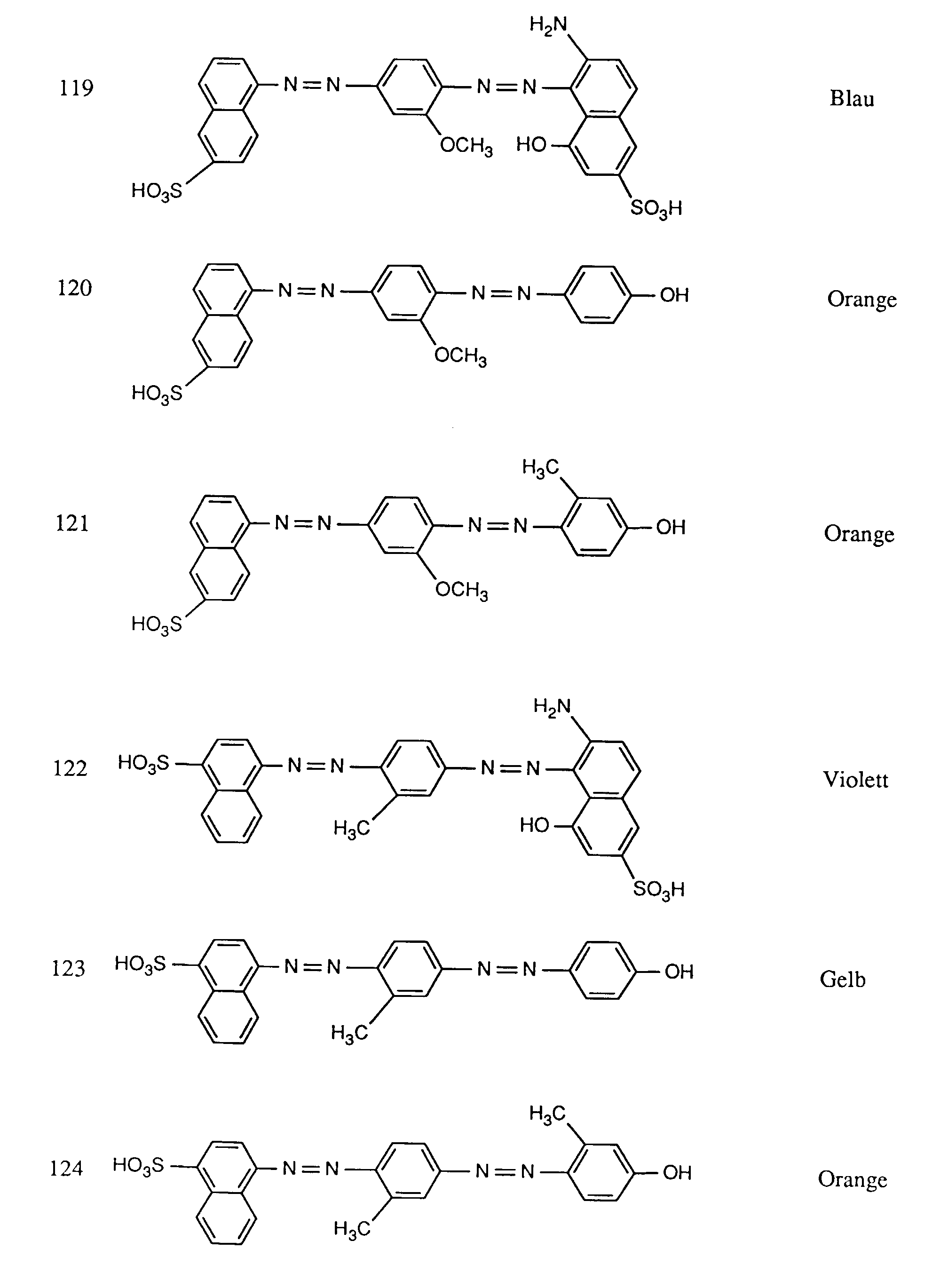

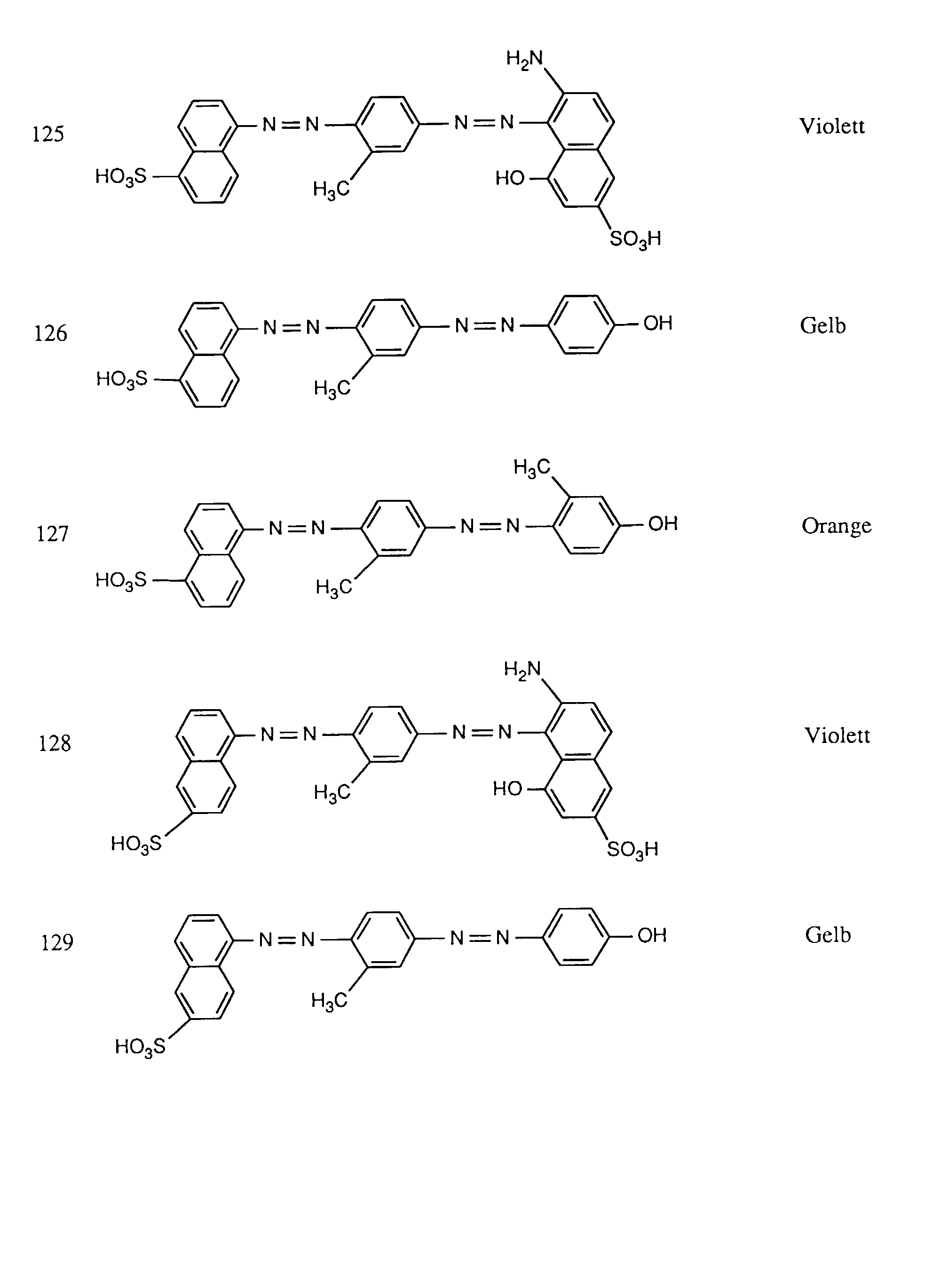

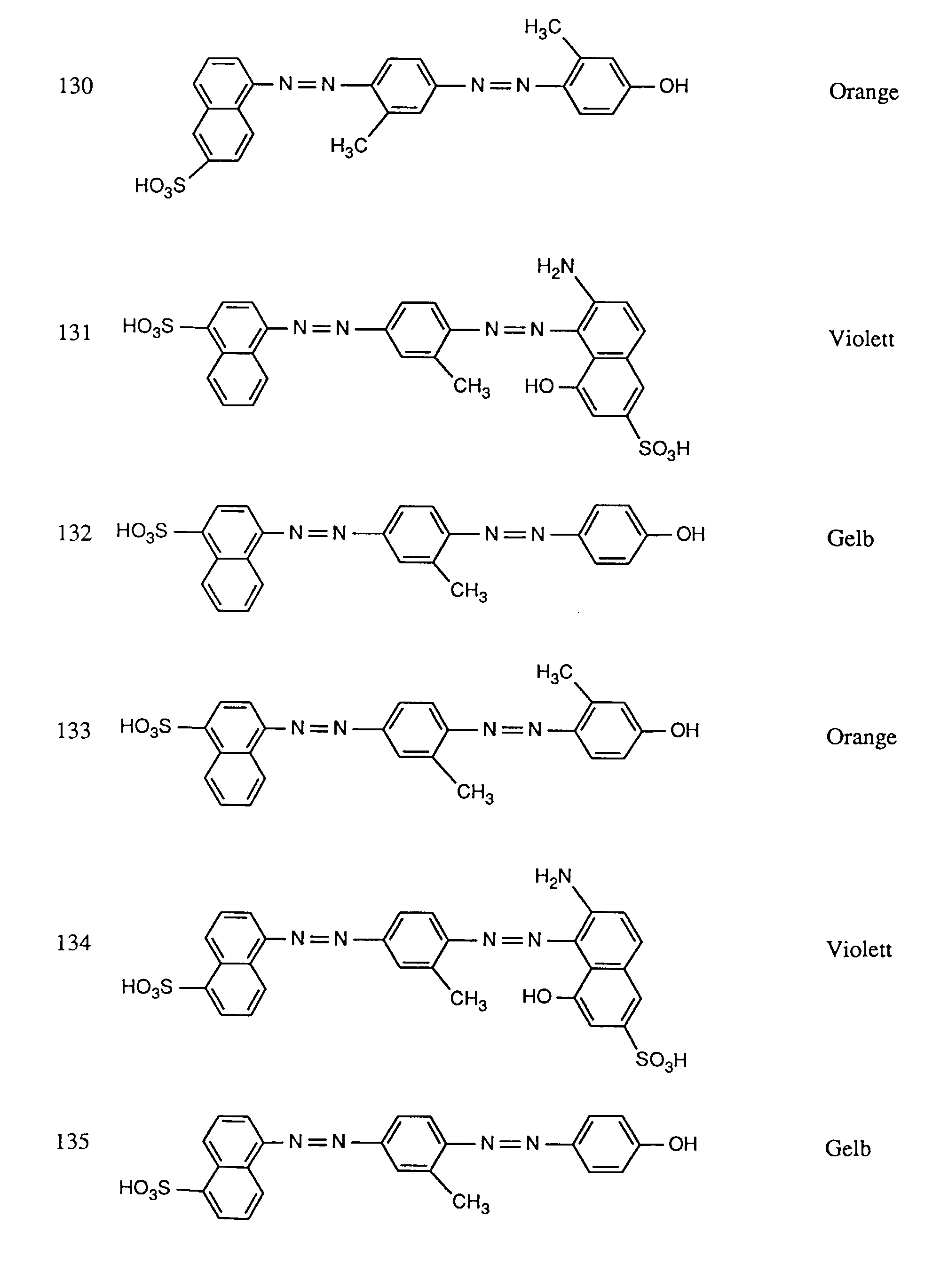

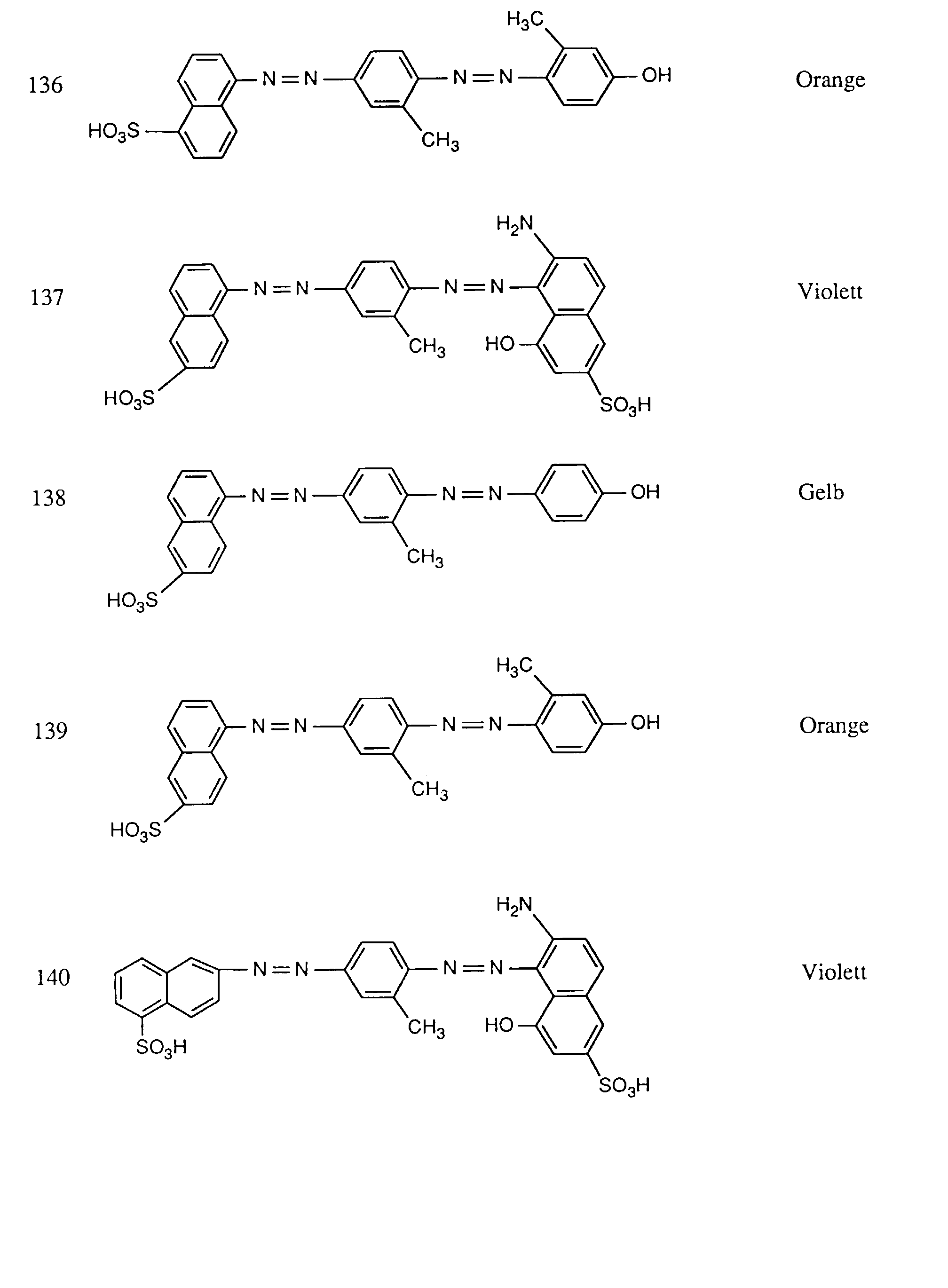

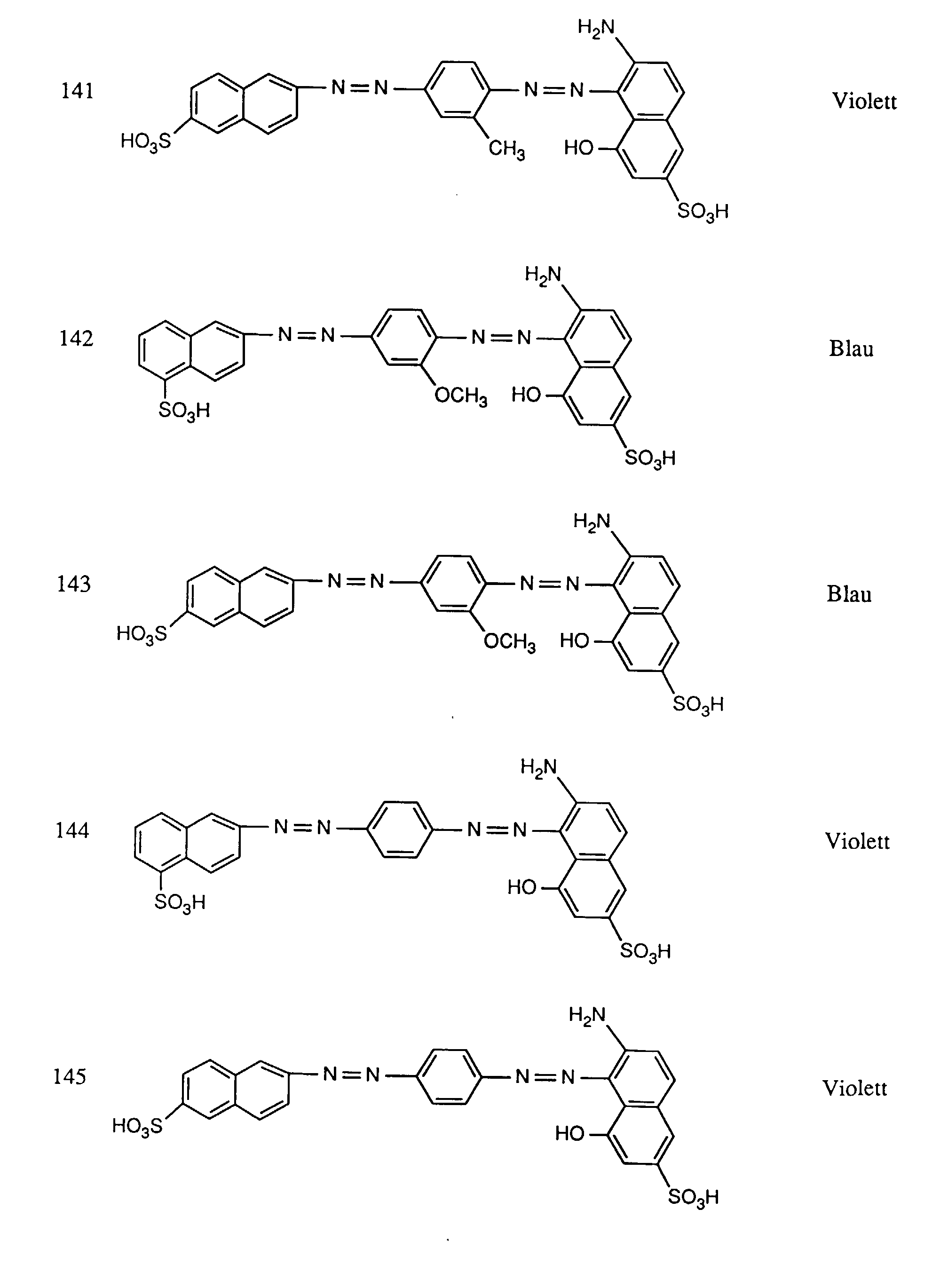

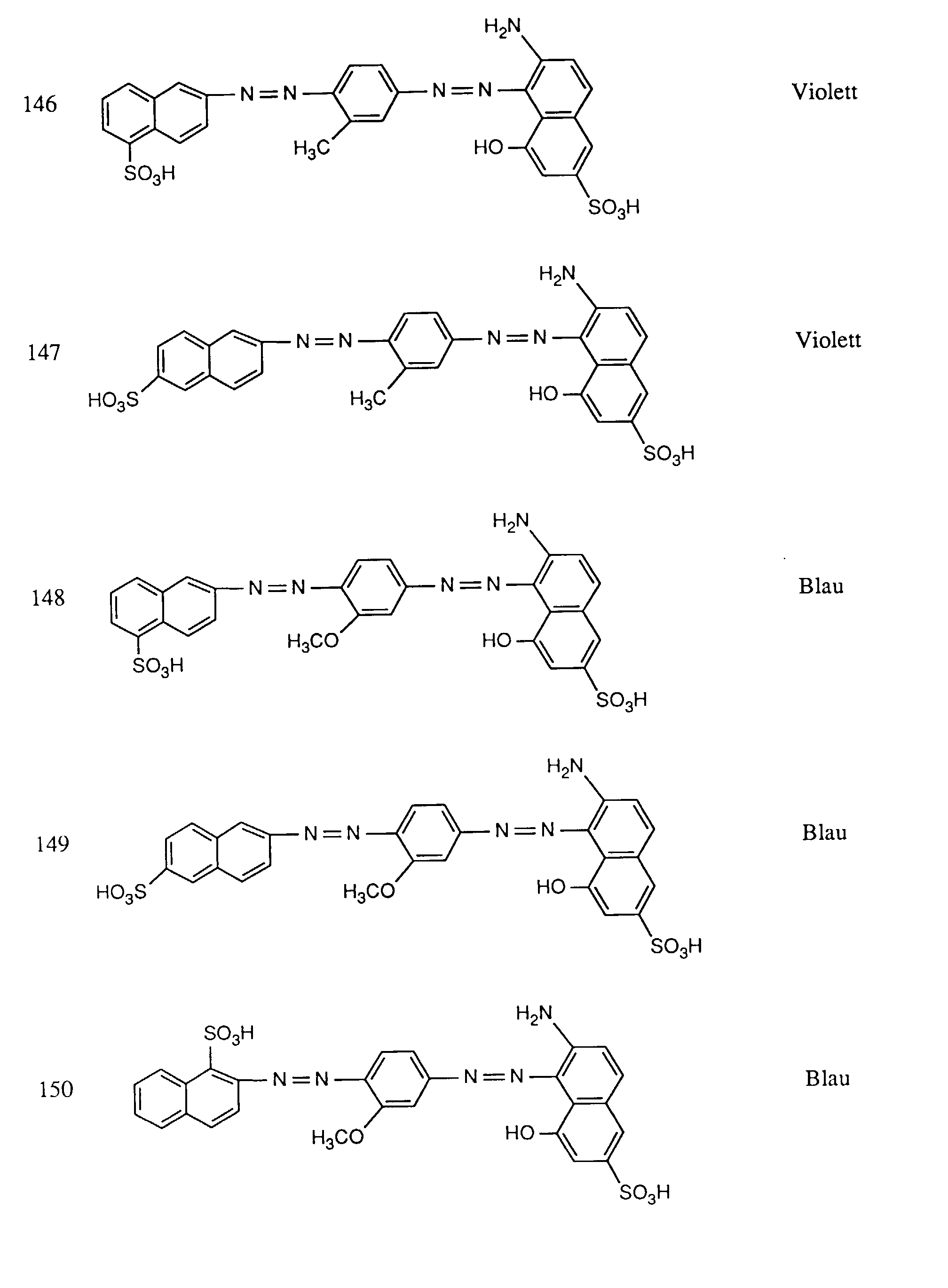

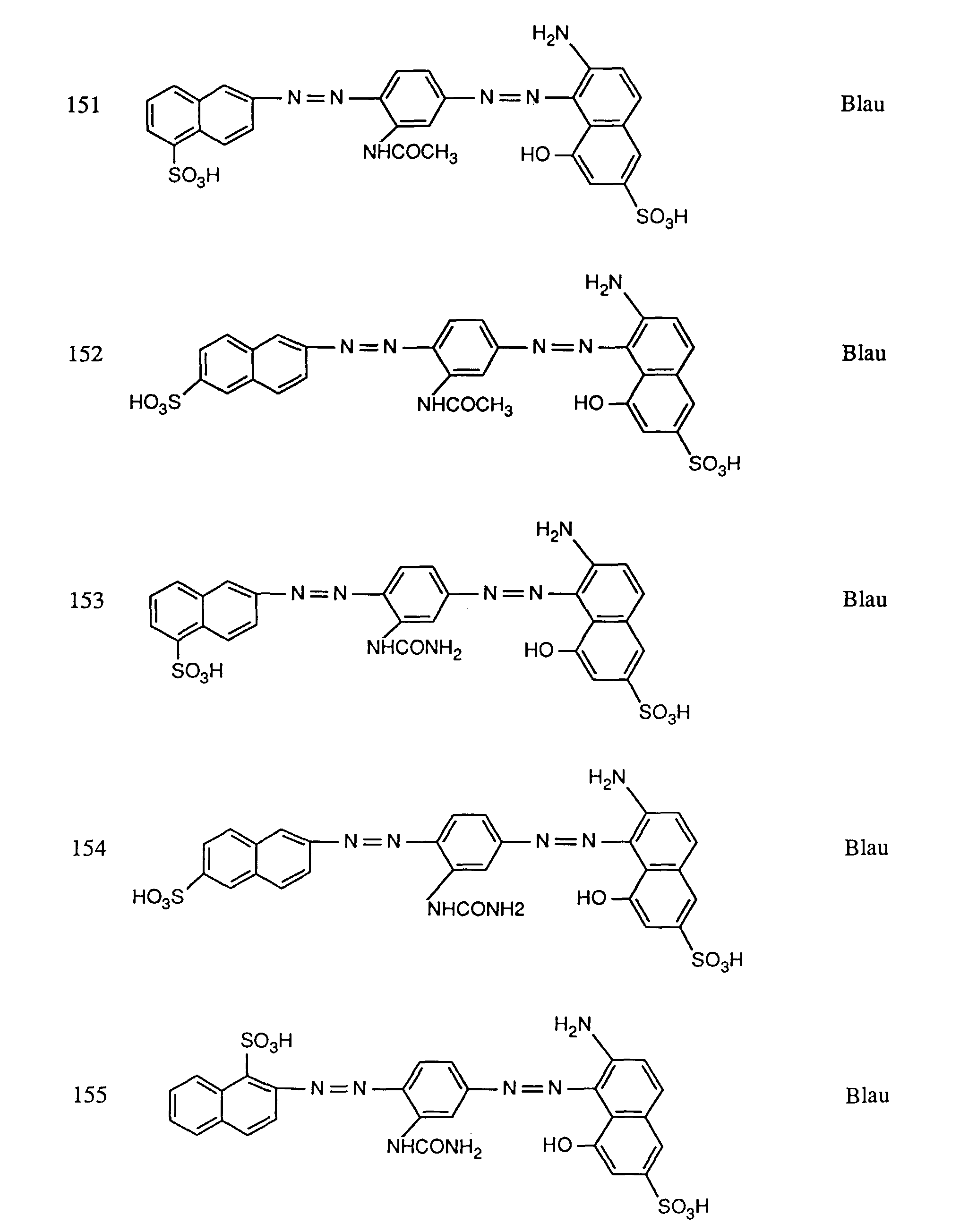

### Beispiel 156: 5,37 Teile der Verbindung der Formel

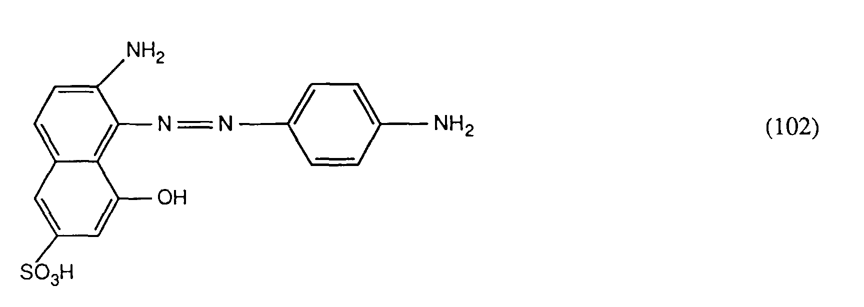

werden in 50 Teilen warmem Wasser neutral gelöst und mit 2,5 Teilen einer 4-normalen Natriumnitritlösung versetzt. Die so erhaltene Lösung gibt man zu einer Mischung von 50 Teilen Eis und 3 Teilen Salzsäure (32%). Nach einiger Zeit wird der Nitritüberschuss mit Sulfaminsäure zerstört.

Die so erhaltene Suspension der Diazokomponente gibt man zu einer zweiten Lösung, welche 4,49 Teile Phenyl-Perisäure und 60 Teile Wasser enthält und deren pH-Wert neutral gestellt ist, zu. Hierbei wird durch Zugabe einer wässrigen Natriumhydroxidlösung ein pH-Wert von 7 eingehalten. Nach beendeter Kupplung wird der Farbstoff durch Zugabe von Methanol ausgefällt. Anschliessend wird der pH auf einen Wert von 11 gestellt, der Farbstoff filtriert, mit verdünnter Natriumchloridlösung gewaschen und im Vakuum bei einer Temperatur von 50 bis 60°C getrocknet. Man erhält 7,5 Teile eines Farbstoffs, welcher in Form der freien Säure der Verbindung der Formel 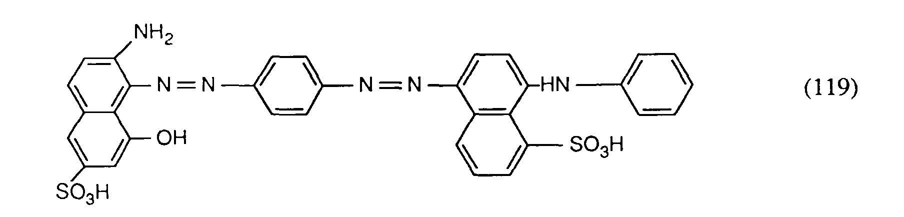 enspricht. Der Farbstoff der Formel (119) färbt Wolle und synthetisches Polyamidfasermaterial in blauen Farbtönen.

### Beispiele 157 bis 159: Verfährt man wie in Beispiel 156 angegeben, verwendet jedoch anstelle einer Verbindung der Formel (102) eine Verbindung der Formel

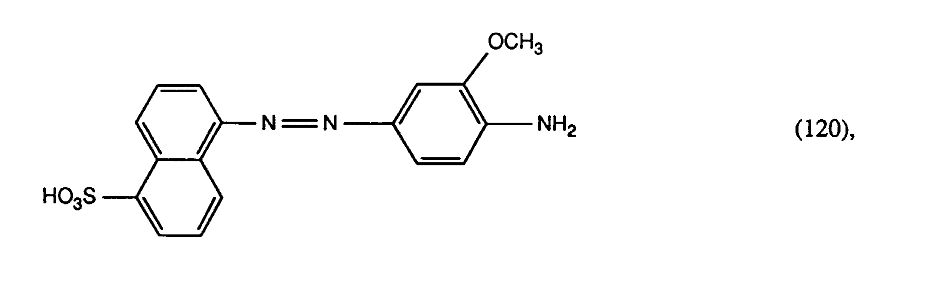

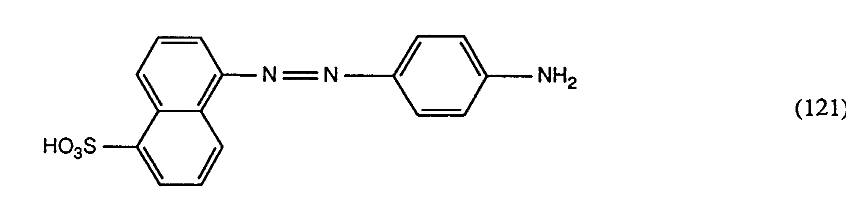

oder 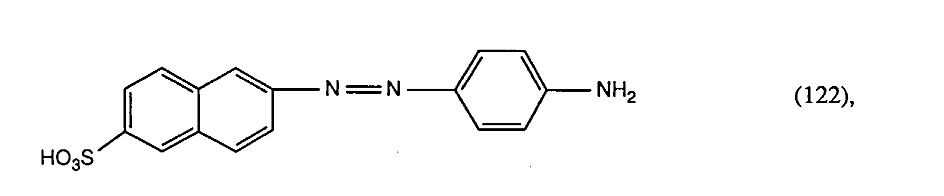 so erhält man analoge Farbstoffe, welche Wolle und synthetisches Polyamidfasermaterial in violett-blauen Farbtönen färben.

### Beispiel 160: Man löst bei Raumtemperatur 2,13 Teile der Verbindung der Formel

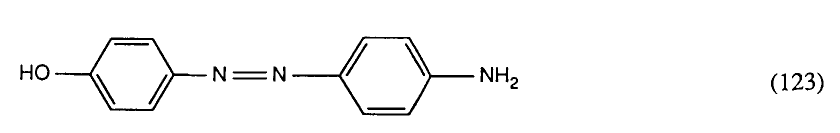

in 25 Teilen Wasser unter Zusatz von 5,5 Teilen 2-normaler wässriger Natriumhydroxidlösung und gibt 2,5 Teile einer 4-normalen Natriumnitritlösung hinzu. Die Lösung wird auf eine Mischung von 25 Teilen Eis und 3,5 Teilen Salzsäure (32%) getropft. Nach einiger Zeit wird der Nitritüberschuss mit Sulfaminsäure zerstört.

Die so erhaltene Suspension der Diazokomponente wird bei Raumtemperatur zu einer zweiten Lösung, welche 3 Teile Phenyl-Perisäure und 50 Teile Wasser enthält und dessen pH-Wert neutral gestellt ist, zulaufen gelassen. Während des Zulaufs der Suspension der Diazokomponente wird der pH durch Zugabe von 2-normaler wässriger Natriumhydroxidlösung bei einem Wert von 7 bis 8 gehalten. Der erhaltene Farbstoff wird durch Zugabe von Natriumchlorid ausgefällt, abfiltriert, mit verdünnter Natriumchloridlösung gewaschen und im Vakuum bei einer Temperatur von 50 bis 60°C getrocknet. Man erhält 3,8 Teile eines Farbstoffs, welcher in Form der freien Säure der Verbindung der Formel 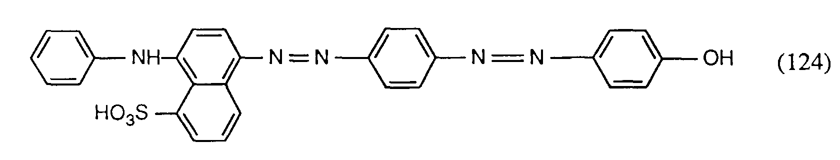 entspricht. Der Farbstoff der Formel (124) färbt Wolle und synthetisches Polyamidfasermaterial in bordeaux-roten Farbtönen.

5 Teile des Farbstoffs der Formel (124) werden in 100 Teilen Wasser bei einer Temperatur von 70 bis 75°C und einem pH-Wert von 9 gelöst. Anschliessend lässt man Diethylsulfat zutropfen, wobei der pH durch Zugabe von 2-normaler Natriumhydroxidlösung bei einem Wert von 9 gehalten wird. Wenn dünnschichtchromatographisch das Ende der Alkylierung festgestellt wird, wird der ausgefällte Farbstoff filtriert, mit verdünnter Natriumchloridlösung gewaschen und im Vakuum bei einer Temperatur von 50 bis 60°C getrocknet. Man erhält 2,6 Teile eines Farbstoffs, welcher in Form der freien Säure der Verbindung der Formel 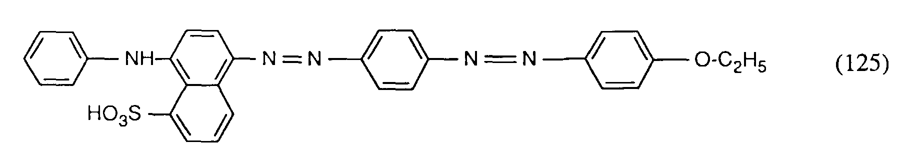 entspricht. Der Farbstoff der Formel (125) färbt Wolle und synthetisches Polyamidfasermaterial in violetten Farbtönen.

### Beispiel 161: Analog zu den Angaben in Beispiel 160 kann der Farbstoff der Formel

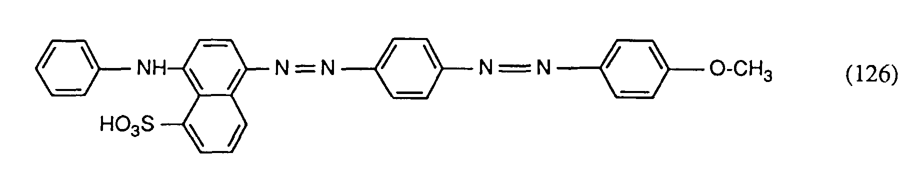

erhalten werden. Der Farbstoff der Formel (126) färbt Wolle und synthetisches Polyamidfasermaterial in violetten Farbtönen.

Färbevorschrift I: Man färbt 10 Teile Helancatrikot in 500 Teilen einer wässrigen Flotte, die 1 g/l Mononatriumphosphat enthält und mit Dinatriumphosphat auf pH 6 gestellt wird. Der Anteil des Farbstoffs gemäss Beispiel 1 beträgt 0,8%, bezogen auf das Fasergewicht. Die Färbedauer bei einer Temperatur von 98°C beträgt 30 bis 90 Minuten. Das gefärbte Helancastück wird anschliessend herausgenommen und wie üblich gewaschen und getrocknet. Man erhält ein bordeaux-rot gefärbtes Helancastück, das gute Gesamtechtheiten aufweist.

Färbevorschrift II: 10 Teile Wollstrickgarn werden bei 50°C in ein Färbebad eingerührt, das auf 400 Teile Wasser 0,4 Teile des Farbstoffs gemäss Beispiel 1 und 5 Teile Natriumsulfat enthält und mit Essigsäure auf einen pH-Wert von 5 gestellt ist. Die Flotte wird im Verlauf von 45 Minuten zum Sieden gebracht und während weiteren 45 Minuten bei Kochtemperatur gehalten. Daraufhin wird das Färbegut herausgenommen, mit kaltem Wasser gründlich gespült und getrocknet. Man erhält eine bordeaux-rote Wollfärbung mit guten Echtheitseigenschaften.

## Patentansprüche

1. Azofarbstoffe der Formel 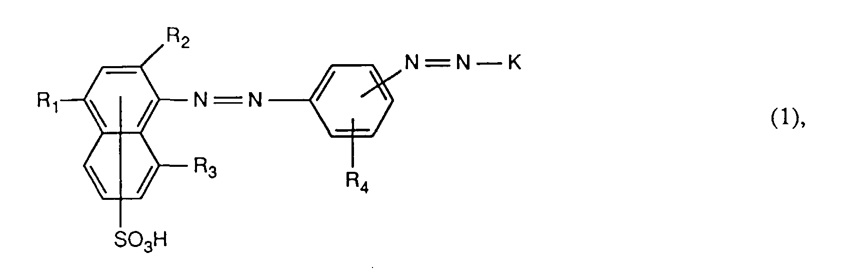 worin
R₁ Wasserstoff oder gegebenenfalls substituiertes Phenylamino,
R₂ Wasserstoff, Amino oder N-Mono- oder N,N-Di-C₁-C₄-Alkylamino,
R₃ Wasserstoff oder Hydroxyl,
R₄ Wasserstoff, C₁-C₄-Alkyl, C₁-C₄-Alkoxy, C₂-C₄-Alkanoylamino, Ureido oder Halogen und
K ein Rest der Formel 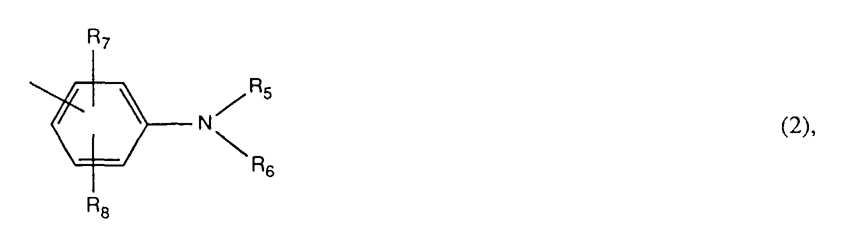 worin
R₅ und R₆ unabhängig voneinander Wasserstoff oder gegebenenfalls durch Hydroxyl oder Phenyl substituiertes C₁-C₄-Alkyl sind, wobei der Phenylrest unsubstituiert oder durch C₁-C₄-Alkyl, C₁-C₄-Alkoxy, C₂-C₄-Alkanoylamino, Ureido, Halogen oder Sulfo substituiert ist, und
R₇ und R₈ unabhängig voneinander Wasserstoff, C₁-C₄-Alkyl, C₁-C₄-Alkoxy, C₂-C₄-Alkanoylamino, Ureido, Halogen oder Sulfo bedeuten;
oder ein Rest der Formel 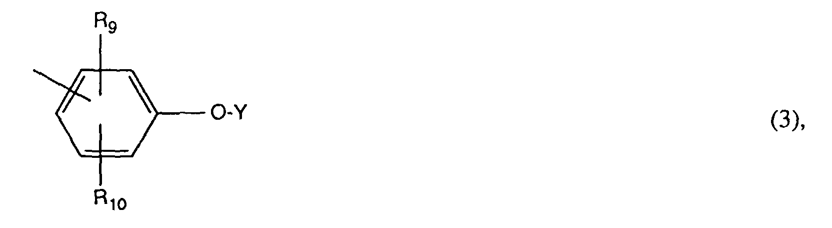 worin
Y Wasserstoff oder gegebenenfalls durch Hydroxyl substituiertes C₁-C₄-Alkyl ist und
R₉ und R₁₀ unabhängig voneinander Wasserstoff, C₁-C₄-Alkyl, C₁-C₄-Alkoxy, C₂-C₄-Alkanoylamino, Ureido, Halogen oder Sulfo bedeuten;
oder ein Rest der Formel 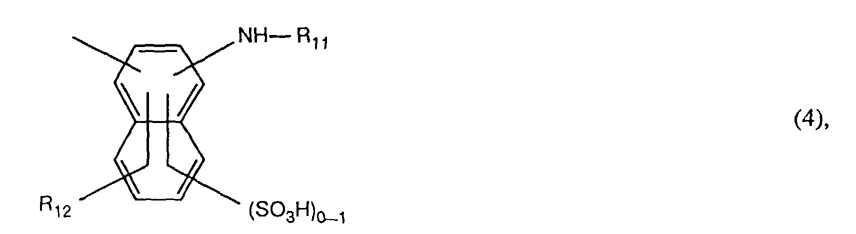 worin
R₁₁ Wasserstoff, C₁-C₄-Alkyl oder gegebenenfalls durch C₁-C₄-Alkyl, C₁-C₄-Alkoxy, C₂-C₄-Alkanoylamino, Ureido, Halogen oder Sulfo substituiertes Phenyl und
R₁₂ Wasserstoff, C₁-C₄-Alkyl, C₁-C₄-Alkoxy, C₂-C₄-Alkanoylamino, Ureido, Halogen oder Hydroxyl bedeutet;
oder ein Rest der Formel 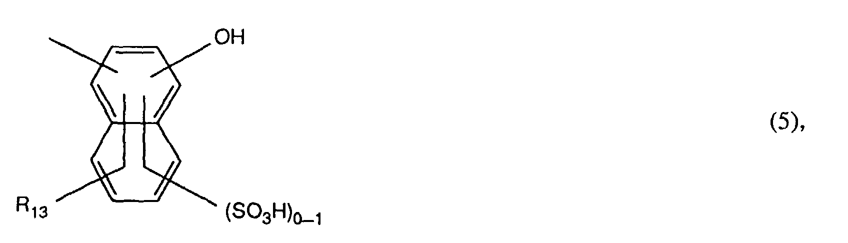 worin
R₁₃ Wasserstoff, C₁-C₄-Alkyl, C₁-C₄-Alkoxy, C₂-C₄-Alkanoylamino, Ureido oder Halogen bedeutet;
oder ein Rest der Formel 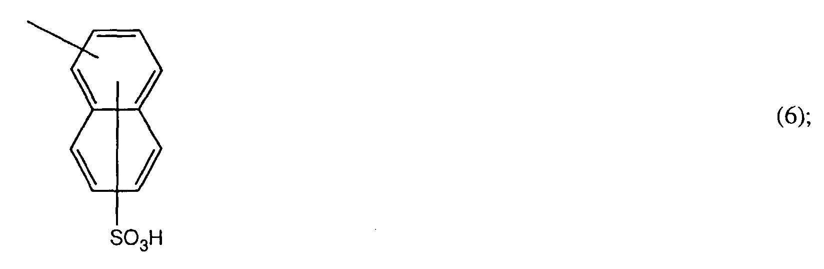 oder ein Rest der Formel 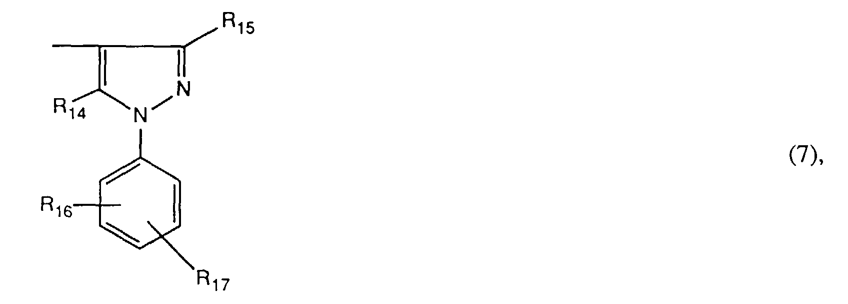 worin
R₁₄ Amino oder Hydroxyl,
R₁₅ Methyl oder Carboxyl und
R₁₆ und R₁₇ unabhängig voneinander Wasserstoff, C₁-C₄-Alkyl, C₁-C₄-Alkoxy, C₂-C₄-Alkanoylamino, Ureido, Halogen oder Sulfo bedeuten;
oder ein Rest der Formel 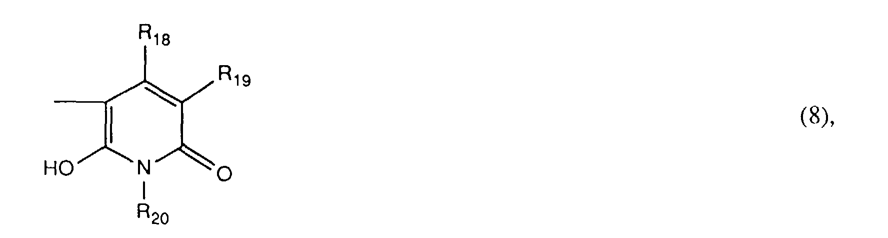 worin
R₁₈ Wasserstoff oder C₁-C₄-Alkyl,
R₁₉ Cyano, Carbamoyl oder Sulfomethyl und
R₂₀ Wasserstoff, C₁-C₄-Alkyl oder unsubstituiertes oder durch C₁-C₄-Alkyl, C₁-C₄-Alkoxy, C₂-C₄-Alkanoylamino, Ureido, Halogen oder Sulfo substituiertes Phenyl bedeutet;
oder ein Rest der Formel 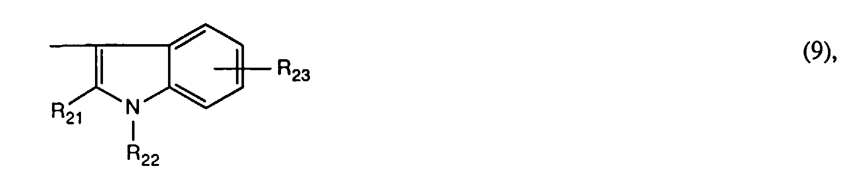 worin
R₂₁ Wasserstoff, C₁-C₈-Alkyl oder unsubstituiertes oder durch C₁-C₄-Alkyl, C₁-C₄-Alkoxy, C₂-C₄-Alkanoylamino, Ureido, Halogen oder Sulfo substituiertes Phenyl,
R₂₂ Wasserstoff oder C₁-C₈-Alkyl und
R₂₃ Wasserstoff, C₁-C₄-Alkyl, C₁-C₄-Alkoxy, C₂-C₄-Alkanoylamino, Ureido, Halogen oder Sulfo bedeutet;
ist, und die Azofarbstoffe der Formel (1) mindestens eine und höchstens zwei Sulfogruppen enthalten,
mit der Massgabe, dass, falls R₁ und R₂ Wasserstoff sind und K ein Rest der Formel (2) ist, der Rest R₄ C₂-C₄-Alkanoylamino oder Ureido bedeutet.

2. Azofarbstoffe gemäss Anspruch 1, worin
R₁ Wasserstoff ist.

3. Azofarbstoffe gemäss einem der Ansprüche 1 und 2, worin
R₂ Wasserstoff oder Amino ist.

4. Azofarbstoffe gemäss einem der Ansprüche 1 bis 3, worin
R₄ Wasserstoff, C₁-C₄-Alkyl, C₁-C₄-Alkoxy, C₂-C₄-Alkanoylamino oder Ureido ist.

5. Azofarbstoffe gemäss einem der Ansprüche 1 bis 4, worin
K ein Rest der Formel (3), (4) oder (6) ist.

6. Azofarbstoffe gemäss einem der Ansprüche 1 bis 5, worin
K ein Rest der Formel (4) oder (6) ist.

7. Azofarbstoffe gemäss Anspruch 1, der Formel 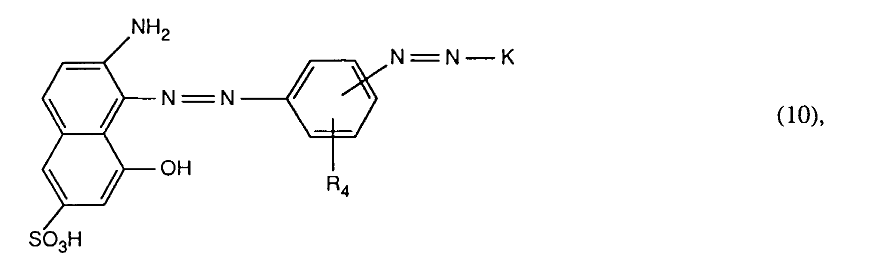 worin R₄ und K die in Anspruch 1 angegebenen Bedeutungen haben.

8. Azofarbstoffe gemäss Anspruch 7, worin
R₄ Wasserstoff, C₁-C₄-Alkyl, C₁-C₄-Alkoxy, C₂-C₄-Alkanoylamino oder Ureido und
K ein Rest der Formel (3), (4) oder (6) ist.

9. Azofarbstoffe gemäss Anspruch 1, der Formel 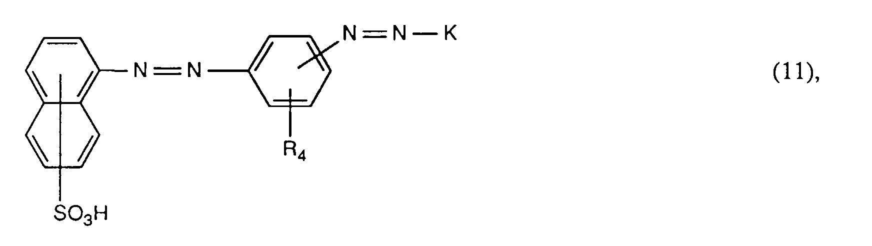 worin R₄ und K die in Anspruch 1 angegebenen Bedeutungen haben.

10. Azofarbstoffe gemäss Anspruch 9, worin
R₄ Wasserstoff, C₁-C₄-Alkyl, C₁-C₄-Alkoxy, C₂-C₄-Alkanoylamino oder Ureido und
K ein Rest der Formel (3), (4) oder (6) ist.

11. Verfahren zur Herstellung von Azofarbstoffen gemäss Anspruch 1, dadurch gekennzeichnet, dass man ein Amin der Formel 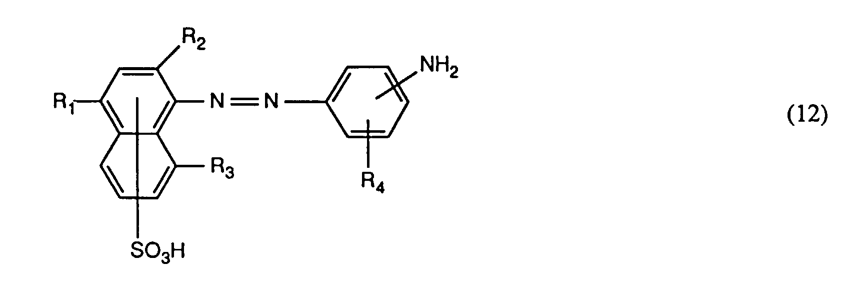 diazotiert und auf eine Kupplungskomponente der Formel
H-K (13)
kuppelt, oder
ein Amin der Formel 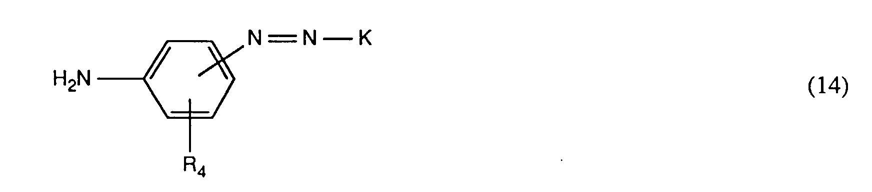 diazotiert und auf eine Kupplungskomponente der Formel 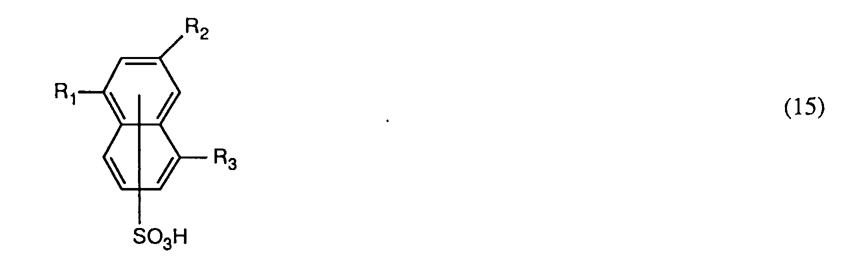 kuppelt,
wobei gegebenenfalls im Anschluss an die Umsetzung der Verbindungen der Formeln (12) und (13) oder der Verbindungen der Formeln (14) und (15) eine Umwandlungsreaktion erfolgt und R₁, R₂, R₃, R₄ und K die in Anspruch 1 angegebenen Bedeutungen haben.

12. Verwendung der Azofarbstoffe gemäss einem der Ansprüche 1 bis 10 bzw. der gemäss Anspruch 11 erhaltenen Azofarbstoffe zum Färben oder Bedrucken von hydroxylgruppenhaltigem oder stickstoffhaltigem Fasermaterial.

13. Verwendung gemäss Anspruch 12 zum Färben oder Bedrucken von natürlichem oder synthetischem Polyamidfasermaterial, insbesondere von Wolle.

## Claims

1. An azo dye of the formula 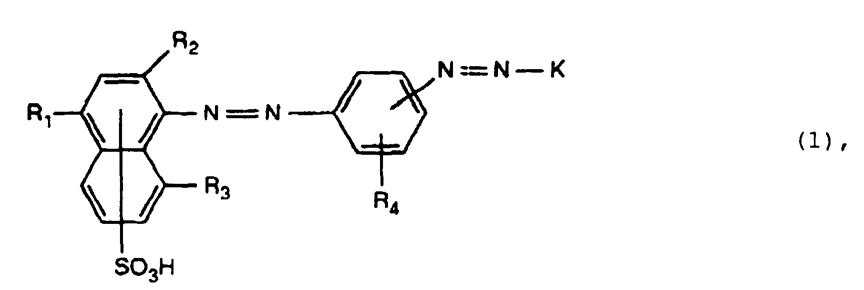 in which
R₁ is hydrogen or substituted or unsubstituted phenylamino,
R₂ is hydrogen, amino or N-mono- or N,N-di-C₁-C₄alkylamino,
R₃ is hydrogen or hydroxyl,
R₄ is hydrogen, C₁-C₄alkyl, C₁-C₄alkoxy, C₂-C₄alkanoylamino, ureido or halogen and
K is a radical of the formula 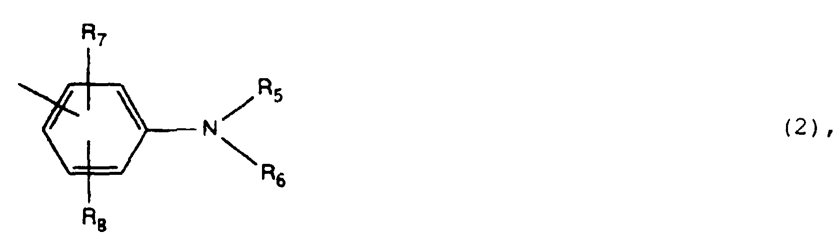 in which
R₅ and R₆ independently of one another are hydrogen or C₁-C₄alkyl which is unsubstituted or substituted by hydroxyl or phenyl, in which the phenyl radical is unsubstituted or substituted by C₁-C₄alkyl, C₁-C₄alkoxy, C₂-C₄alkonylamino, ureido, halogen or sulfo, and
R₇ and R₈ independently of one another are hydrogen, C₁-C₄alkyl, C₁-C₄alkoxy, C₂-C₄alkanoylamino, ureido, halogen or sulfo;
or a radical of the formula 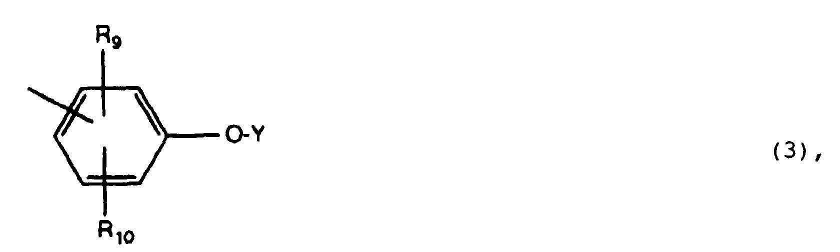 in which
Y is hydrogen or C₁-C₄alkyl which is unsubstituted or substituted by hydroxyl and
R₉ and R₁₀ independently of one another are hydrogen, C₁-C₄alkyl, C₁-C₄alkoxy, C₂-C₄alkanoylamino, ureido, halogen or sulfo;
or a radical of the formula 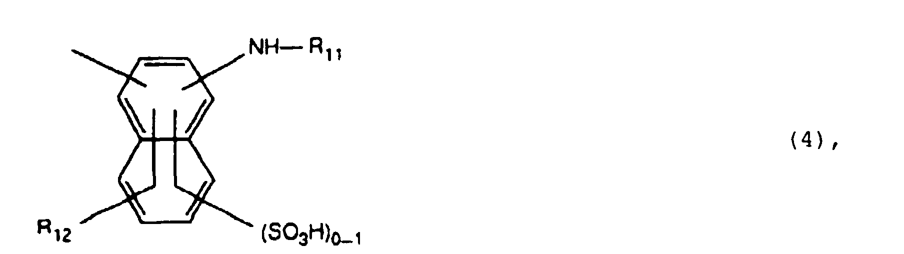 in which
R₁₁ is hydrogen, C₁-C₄alkyl or phenyl which is unsubstituted or substituted by C₁-C₄alkyl, C₁-C₄alkoxy, C₂-C₄alkanoylamino, ureido, halogen or sulfo and
R₁₂ is hydrogen, C₁-C₄alkyl, C₁-C₄alkoxy, C₂-C₄alkanoylamino, ureido, halogen or hydroxyl;
or a radical of the formula 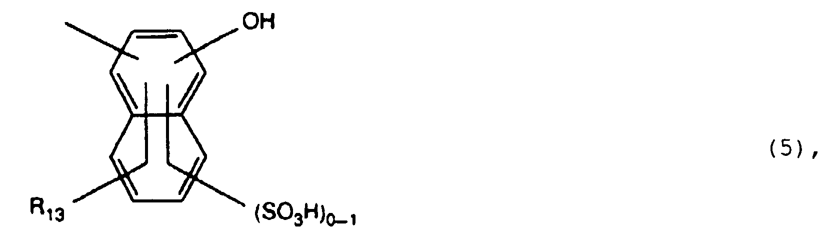 in which R₁₃ is hydrogen, C₁-C₄alkyl, C₁-C₄alkoxy, C₂-C₄alkanoylamino, ureido or halogen;
or a radical of the formula 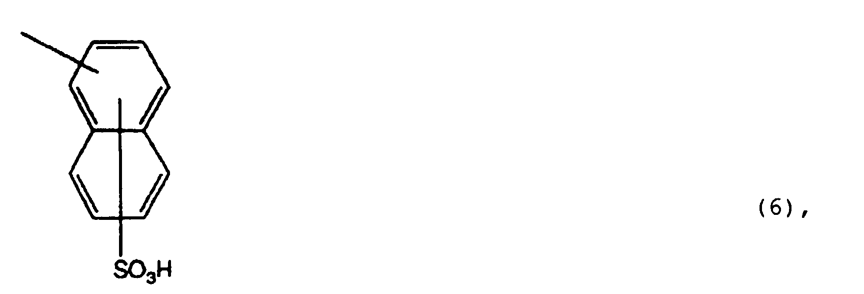 or a radical of the formula 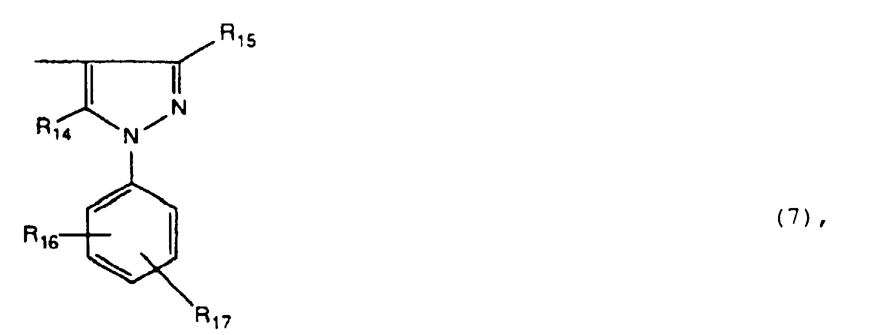 in which
R₁₄ is amino or hydroxyl,
R₁₅ is methyl or carboxyl and
R₁₆ and R₁₇ independently of one another are hydrogen, C₁-C₄alkyl, C₁-C₄alkoxy, C₂-C₄alkanoylamino, ureido, halogen or sulfo;
or a radical of the formula 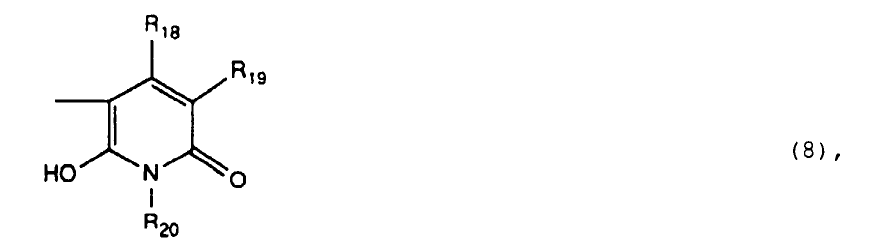 in which
R₁₈ is hydrogen or C₁-C₄alkyl,
R₁₉ is cyano, carbamoyl or sulfomethyl and
R₂₀ is hydrogen, C₁-C₄alkyl or phenyl which is unsubstituted or substituted by C₁-C₄alkyl, C₁-C₄alkoxy, C₂-C₄alkanoylamino, halogen or sulfo;
or a radical of the formula 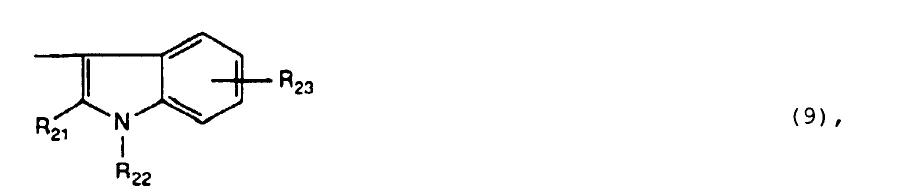 in which
R₂₁ is hydrogen, C₁-C₈alkyl or phenyl which is unsubstituted or substituted by C₁-C₄alkyl, C₁-C₄alkoxy, C₂-C₄alkanoylamino, ureido, halogen or sulfo,
R₂₂ is hydrogen or C₁-C₈alkyl and
R₂₃ is hydrogen, C₁-C₄alkyl, C₁-C₄alkoxy, C₂-C₄alkanoylamino, ureido, halogen or sulfo;
and the azo dye of the formula (1) comprises at least one and not more than two sulfo groups,
with the proviso that if R₁ and R₂ are hydrogen and K is a radical of the formula (2), the radical R₄ is C₂-C₄alkanoylamino or ureido.

2. An azo dye according to claim 1, in which
R₁ is hydrogen.

3. An azo dye according to claim 1 or 2, in which
R₂ is hydrogen or amino.

4. An azo dye according to any one of claims 1 to 3, in which
R₄ is hydrogen, C₁-C₄alkyl, C₁-C₄alkoxy, C₂-C4alkanoylamino or ureido.

5. An azo dye according to any one of claims 1 to 4, in which
K is a radical of the formula (3),(4) or (6).

6. An azo dye according to any one of claims 1 to 5, in which
K is a radical of the formula (4) or (6).

7. An azo dye according to claim 1, of the formula 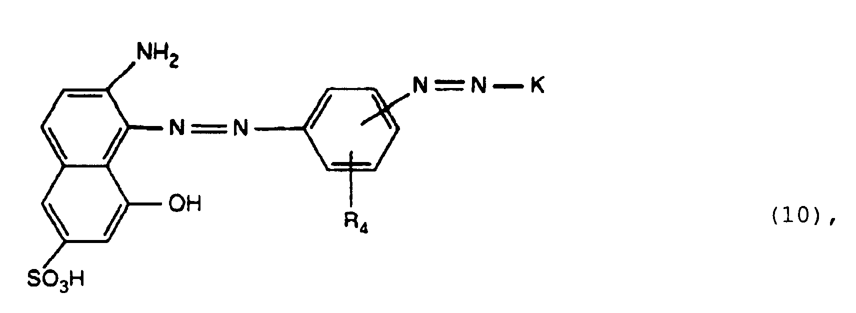 in which R₄ and K are as defined in claim 1.

8. An azo dye according to claim 7, in which
R₄ is hydrogen, C₁-C₄alkyl, C₁-C₄alkoxy, C₂-C₄alkanoylamino or ureido and K is a radical of the formula (3),(4) or (6).

9. An azo dye according to claim 1, of the formula 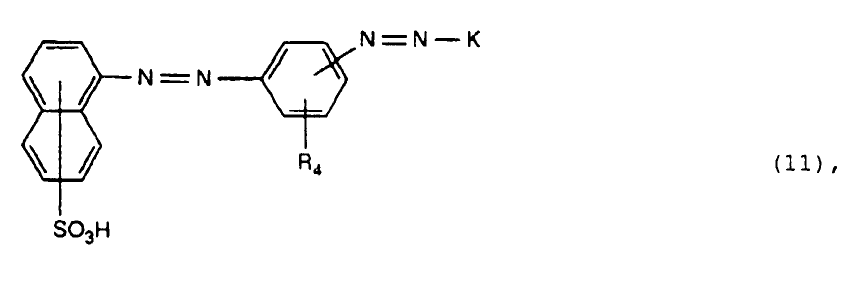 in which R₄ and K are as defined in claim 1.

10. An azo dye according to claim 9, in which R₄ is hydrogen, C₁-C₄alkyl, C₁-C₄alkoxy, C₂-C₄alkanoylamino or ureido and
K is a radical of the formula (3), (4) or (6).

11. A process for the preparation of an azo dye according to claim 1, which comprises diazotizing an amine of the formula 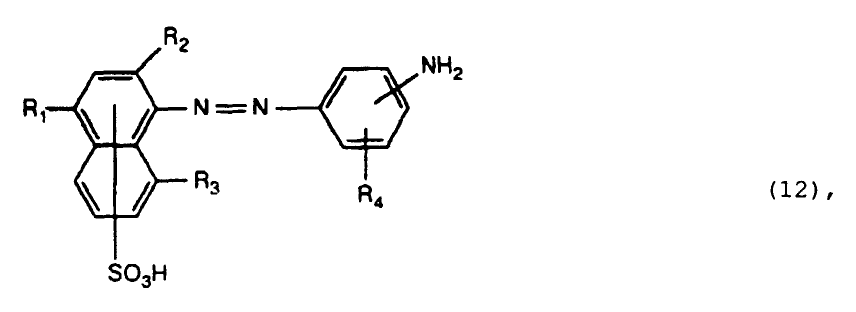 and coupling the diazotization product to a coupling component of the formula
H-K (13),
or
diazotizing an amine of the formula 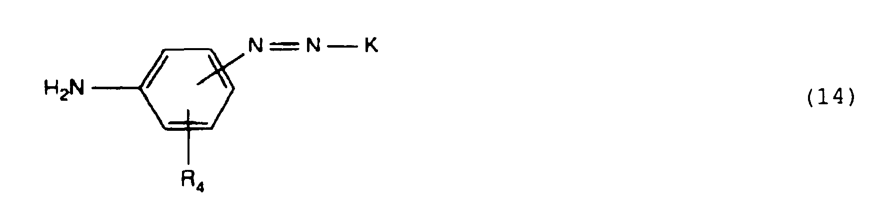 and coupling the diazotization product to a coupling component of the formula 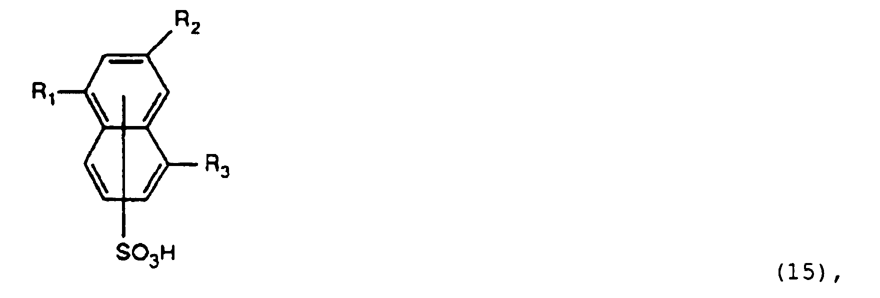 a conversion reaction being carried out, if appropriate, after the reaction of the compounds of the formulae (12) and (13) or of the compounds of the formulae (14) and (15), and R₁, R₂, R₃, R₄ and K being as defined in claim 1.

12. The use of an azo dye according to any one of claims 1 to 10 or of an azo dye obtained according to claim 11 for dyeing or printing fibre material containing hydroxyl groups or nitrogen.

13. The use according to claim 12 for dyeing or printing naturally occurring or synthetic polyamide fibre material, in particular wool.

## Revendications

1. Colorant azoïque de formule 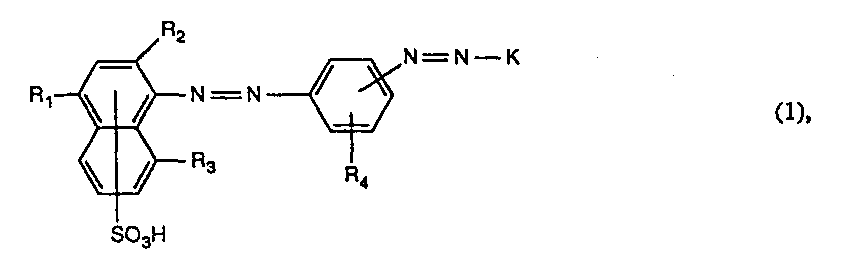 dans laquelle
R₁ représente un atome d'hydrogène ou un groupe phénylamino éventuellement substitué,
R₂ représente un atome d'hydrogène, un groupe amino ou N-mono- ou N,N-di-alkyle en C₁ à C₄-amino,
R₃ représente un atome d'hydrogène ou un groupe hydroxyle,
R₄ représente un atome d'hydrogène, un groupe alkyle en C₁ à C₄, alcoxy en C₁ à C₄, alcanoylamino en C₂ à C₄, uréido ou un atome d'halogène et
K représente un groupe de formule, 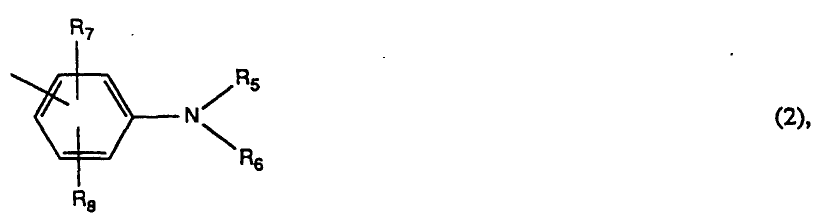 dans laquelle
R₅ et R₆ représentent indépendamment l'un de l'autre un atome d'hydrogène ou un groupe alkyle en C₁ à C₄ éventuellement substitué par un groupe hydroxyle ou phényle, dans lequel le groupe phényle est non substitué ou substitué par un groupe alkyle en C₁ à C₄, alcoxy en C₁ à C₄, alcanoylamino en C₂ à C₄, uréido ou un atome d'halogène, et
R₇ et R₈ représentent indépendamment l'un de l'autre un atome d'hydrogène, un groupe alkyle en C₁ à C₄, alcoxy en C₁ à C₄, alcanoylamino en C₂ à C₄, uréido, un atome d'halogène ou un groupe sulfo;
ou un groupe de formule 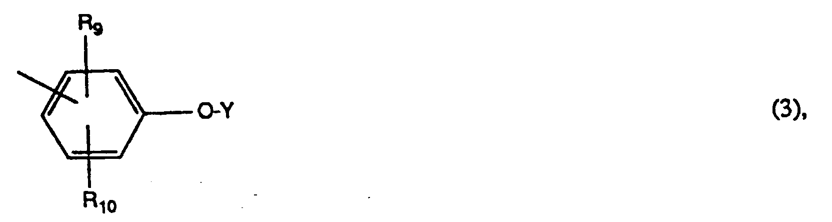 dans laquelle
Y représente un atome d'hydrogène ou un groupe alkyle en C₁ à C₄ éventuellement substitué par un groupe hydroxyle et
R₉ et R₁₀ représentent indépendamment l'un de l'autre un atome d'hydrogène, un groupe alkyle en C₁ à C₄, alcoxy en C₁ à C₄, alcanoylamino en C₂ à C₄, uréido, un atome d'halogène ou un groupe sulfo,
ou un groupe de formule 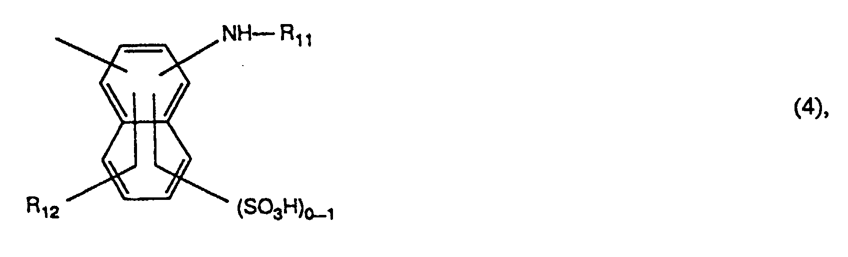 dans laquelle
R₁₁ représente un atome d'hydrogène ou un groupe phényle éventuellement substitué par un groupe alkyle en C₁ à C₄, alcoxy en C₁ à C₄, alcanoylamino en C₂ à C₄, uréido, un atome d'halogène ou un groupe sulfo et
R₁₂ représente un atome d'hydrogène, un groupe alkyle en C₁ à C₄, alcoxy en C₁ à C₄, alcanoylamino en C₂ à C₄, uréido, un atome d'halogène ou un groupe hydroxyle;
ou un groupe de formule 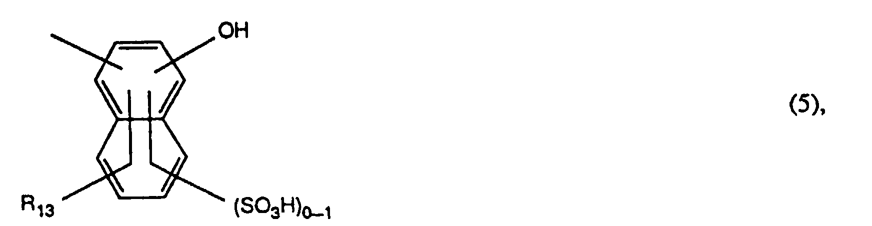 dans laquelle
R₁₃ représente un atome d'hydrogène, un groupe alkyle en C₁ à C₄, alcoxy en C₁ à C₄, alcanoylamino en C₂ à C₄, uréido ou un atome d'halogène;
ou un groupe de formule 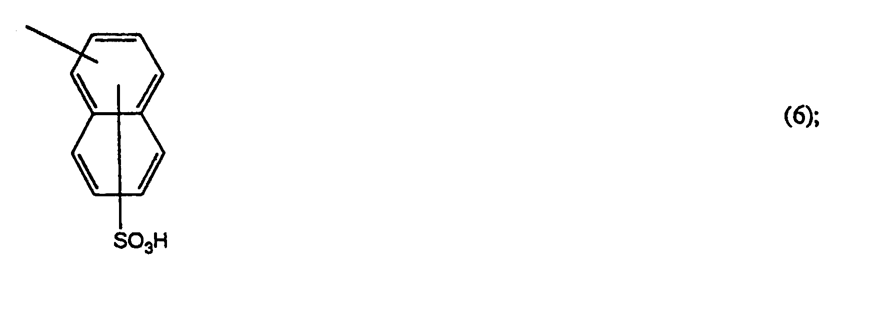 ou un groupe de formule 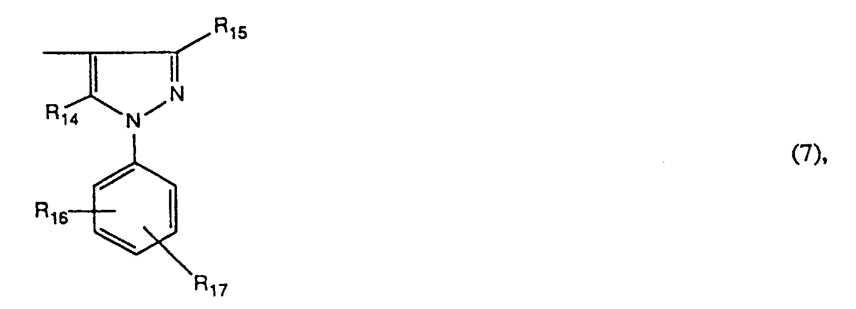 dans laquelle
R₁₄ représente un groupe amino ou hydroxyle,
R₁₅ représente un groupe méthyle ou carbonyle et
R₁₆ et R₁₇ représentent indépendamment l'un de l'autre un atome d'hydrogène, un groupe alkyle en C₁ à C₄, alcoxy en C₁ à C₄, alcanoylamino en C₂ à C₄, uréido, un atome d'halogène ou un groupe sulfo;
ou un groupe de formule 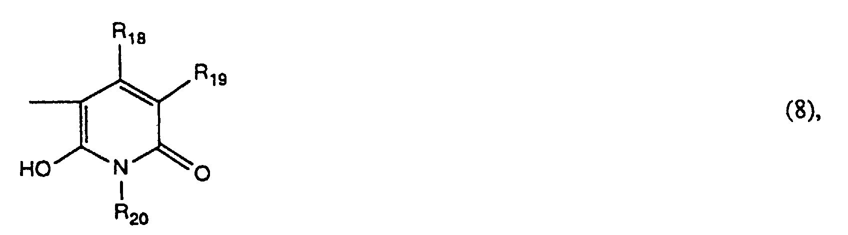 dans laquelle
R₁₈ représente un atome d'hydrogène ou un groupe alkyle en C₁ à C₄,
R₁₉ représente un groupe cyano, carbamoyle ou sulfométhyle et
R₂₀ représente un atome d'hydrogène, un groupe alkyle en C₁ à C₄ ou un groupe phényle non substitué ou substitué par un groupe alkyle en C₁ à C₄, alcoxy en C₁ à C₄, alcanoylamino en C₂ à C₄, uréido, un atome d'halogène ou un groupe sulfo;
ou un groupe de formule 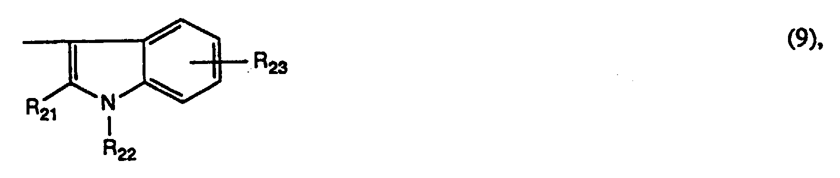 dans laquelle
R₂₁ représente un atome d'hydrogène, un groupe alkyle en C₁ à C₈ ou un groupe phényle non substitué ou substitué par un groupe alkyle en C₁ à C₄, alcoxy en C₁ à C₄, alcanoylamino en C₂ à C₄, uréido, un atome d'halogène ou un groupe sulfo;
R₂₂ représente un atome d'hydrogène, ou un groupe alkyle en C₁ à C₈ et
R₂₃ représente un atome d'hydrogène, un groupe alkyle en C₁ à C₄, alcoxy en C₁ à C₄, alcanoylamino en C₂ à C₄, uréido, un atome d'halogène ou un groupe sulfo;
et les colorants azoïques de formule (1) contiennent au moins un et au plus deux groupes sulfo,
à la condition, que, si R₁ et R₂ sont un atome d'hydrogène et K un groupe de formule (2), le groupe R₄ représente un groupe alcanoylamino en C₂ à C₄ ou uréido.

2. Colorant azoïque selon la revendication 1, dans lequel
R₁ est un atome d'hydrogène.

3. Colorant azoïque selon l'une des revendications 1 et 2, dans lequel
R₂ est un atome d'hydrogène ou un groupe amino.

4. Colorant azoïque selon l'une des revendications 1 à 3, dans lequel
R₄ est un atome d'hydrogène, un groupe alkyle en C₁ à C₄, alcoxy en C₁ à C₄, alcanoylamino en C₂ à C₄ ou uréido.

5. Colorant azoïque selon l'une des revendications 1 à 4, dans lequel
K est un groupe de formule (3), (4) ou (6).

6. Colorant azoïque selon l'une des revendications 1 à 5, dans lequel
K est un groupe de formule (4) ou (6).

7. Colorant azoïque selon la revendication 1, de formule 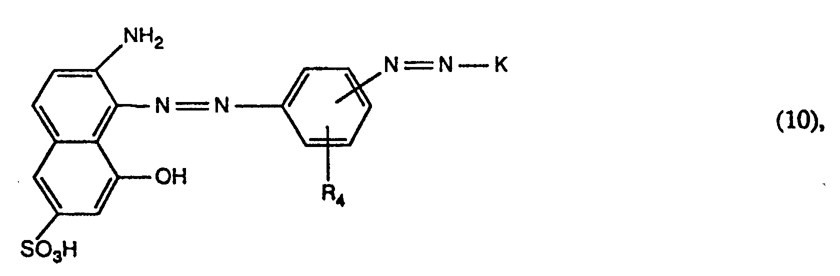 dans laquelle R₄ et K ont les significations indiquées à la revendication 1.

8. Colorant azoïque selon la revendication 7, dans lequel R₄ représente un atome d'hydrogène, un groupe alkyle en C₁ à C₄, alcoxy en C₁ à C₄, alcanoylamino en C₁ à C₄ ou uréido et
K un groupe de formule (3), (4) ou (6).

9. Colorant azoïque selon la revendication 1, de formule 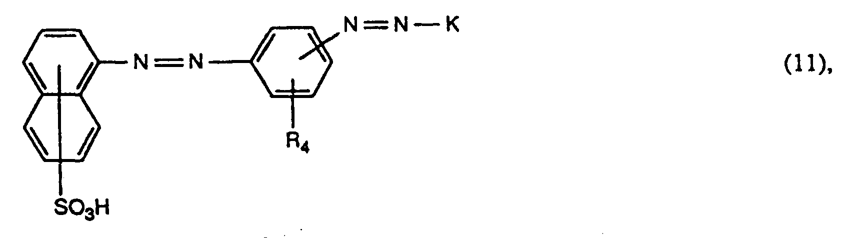 dans laquelle R₄ et K ont les significations indiquées à la revendication 1.

10. Colorant azoïque selon la revendication 9, dans lequel
R₄ représente un atome d'hydrogène, un groupe alkyle en C₁ à C₄, alcoxy en C₁ à C₄, alcanoylamino en C₂ à C₄ ou uréido et
K représente un groupe de formule (3), (4) ou (6).

11. Procédé de préparation de colorants azoïques selon la revendication 1, caractérisé en ce que, l'on réalise la diazotation d'une amine de formule 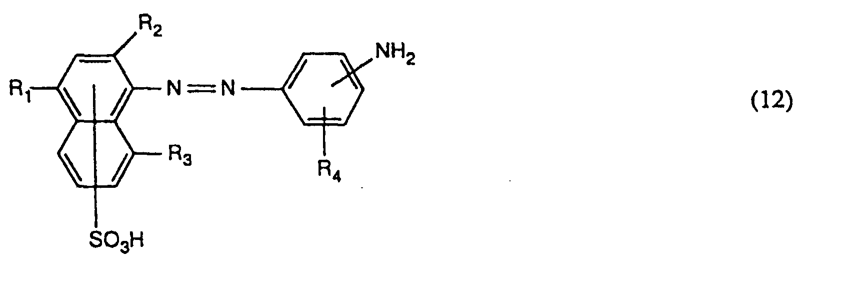 et la copulation sur un composant de copulation de formule
**H-K (13),**
ou la diazotation d'une amine de formule 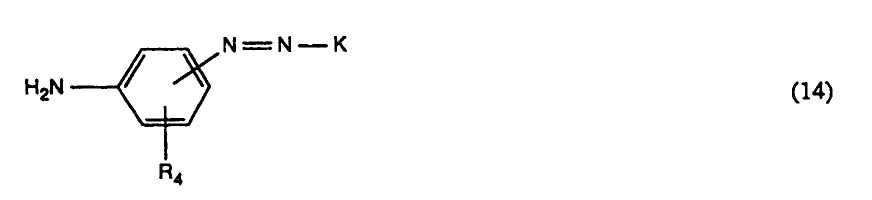 et la copulation sur un composant de copulation de formule 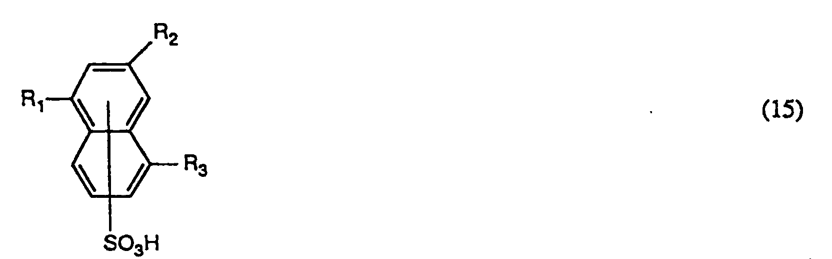 procédé dans lequel on réalise éventuellement à la suite de la réaction des composés des formules (12) et (13) ou des composés des formules (14) et (15) une réaction de conversion et R₁, R₂, R₃, R₄ et K ont les significations indiquées à la revendication 1.

12. Utilisation des colorants azoïques selon l'une des revendications 1 à 10 ou des colorants obtenus selon la revendication 11 pour la teinture ou l'impression de matériaux en fibres hydroxylés ou azotés.

13. Utilisation selon la revendication 12 pour la teinture ou l'impression de matériaux en fibres de polyamide naturels ou synthétiques, en particulier de la laine.
